# EUROPEAN PATENT APPLICATION

(11) **EP 4 645 808 A1**
(43) Date of publication of application: **05.11.2025**
(21) Application number: 24752694.0
(22) Date of filing: 23.01.2024
(51) Int. Cl.: H04L 45/00, H04W 76/10

(54) **INFORMATION PROCESSING METHOD AND COMMUNICATION APPARATUS**

(30) Priority: 09.02.2023 CN 202310136748
(71) Applicant: Huawei Technologies Co., Ltd., Shenzhen, Guangdong 518129 (CN)
(72) Inventor: LI, Hancheng, Shenzhen, Guangdong 518129 (CN); ZHOU, Han, Shenzhen, Guangdong 518129 (CN); WU, Wenfu, Shenzhen, Guangdong 518129 (CN); LIU, Yong, Shenzhen, Guangdong 518129 (CN)
(74) Representative: Pfenning, Meinig & Partner mbB
(86) International application number: PCT/CN2024/073655
(87) International publication number: WO 2024/164837

(57) **Abstract**

This application provides an information processing method and a communication apparatus. The method includes: receiving a first session creation request, where the first session creation request is used to request to create a first session for a terminal device; sending a second session creation request to a first network element, where the second session creation request is used to request to create the first session for the terminal device, the second session creation request includes location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device; receiving a second session creation response that is sent by the first network element for the second session creation request; and sending a first session creation response for the first session creation request. The method described in this application helps reduce management complexity of a centralized control plane.

## Description

This application claims priority to Chinese Patent Application No. 202310136748.3, filed with the China National Intellectual Property Administration on February 9, 2023 and entitled "INFORMATION PROCESSING METHOD AND COMMUNICATION APPARATUS", which is incorporated herein by reference in its entirety.

### TECHNICAL FIELD

This application relates to the field of communication technologies, and in particular, to an information processing method and a communication apparatus.

### BACKGROUND

Currently, when an application is deployed near a location at which a user accesses a network (that is, a network edge), the network needs to help the user find a nearby application, and create a path as short as possible to access the application, to reduce access latency.

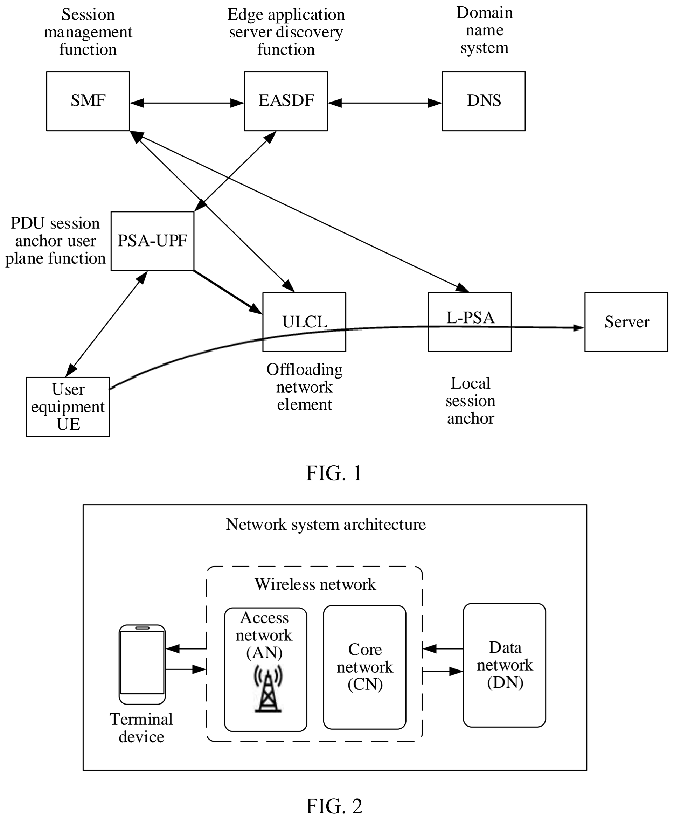

As shown in FIG. 1, user equipment (user equipment, UE) sends a domain name system (domain name system, DNS) request to an edge application server discovery function (edge application server discovery function, EASDF) through a protocol data unit session anchor user plane function (protocol data unit session anchor user plane function, PSA-UPF). The EASDF adds UE location information obtained from a session management function (session management function, SMF) to the DNS request, changes a source address of the DNS request to an address of the EASDF, and then sends an updated DNS request to a DNS server. The DNS server selects, for a user based on the UE location information in the DNS request, a server close to the UE, and then sends a DNS response to the EASDF and returns an address of the server (for example, an OTT server in FIG. 1). After receiving the DNS response, the EASDF sends the address of the server to the SMF, and the SMF selects, based on the address of the server, a user plane network element close to the server as an uplink classifier network element (uplink classifier, ULCL), and selects a user plane network element close to the server as a local PDU session anchor (local PDU session anchor, L-PSA), where the L-PSA and the ULCL may be a same network element. Further, a tunnel between an access network device and the ULCL is created, a tunnel between the ULCL and the PSA-UPF is created, and an offloading policy on the ULCL is created (that is, a packet whose destination address is the address of the server is sent to the server through the L-PSA). In other words, a session path is created.

However, when a large quantity of applications are deployed at the edge, all DNS requests of the user equipment are processed by the centralized SMF and EASDF. As a result, information that needs to be managed by the SMF and the EASDF, signaling that needs to be processed by the SMF and the EASDF, and the like greatly increase. In addition, when a large quantity of user plane network elements are deployed, the centralized SMF needs to manage a large amount of user plane information, or due to a deployment limitation, the centralized SMF cannot directly manage the user plane network elements, increasing management complexity of a centralized control plane.

### SUMMARY

Embodiments of this application provide an information processing method and a communication apparatus, to help reduce management complexity of a centralized control plane.

According to a first aspect, this application provides an information processing method. The method includes: receiving a first session creation request, where the first session creation request is used to request to create a first session for a terminal device; sending a second session creation request to a first network element, where the second session creation request is used to request to create the first session for the terminal device, the second session creation request includes location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device; receiving a second session creation response that is sent by the first network element for the second session creation request; and sending a first session creation response for the first session creation request.

Based on the method described in the first aspect, a control plane network element selects, from a plurality of network elements, the first network element serving the terminal device, that is, the first network element performs intra-domain user plane management, so that direct management of a centralized control plane is avoided, and the centralized control plane is unaware of intra-domain deployment of a user plane network element, an application, and the like, thereby reducing management complexity of the centralized control plane.

In a possible implementation, the method further includes: sending, to a unified data management function network element, an identifier of the first network element serving the terminal device. Based on this manner, when querying the second network element corresponding to the terminal device, another network element can obtain the identifier of the first network element serving the terminal device, so that the terminal device can be associated with the first network element.

In a possible implementation, receiving the first session creation request includes: receiving the first session creation request sent by an access and mobility management function network element; before sending the second session creation request to the first network element, the method further includes: determining the first network element serving the terminal device; and sending the first session creation response for the first session creation request includes: sending the first session creation response for the first session creation request to the access and mobility management function network element. Based on this manner, the second network element selects, from a plurality of managed network elements, the first network element serving the terminal device, thereby avoiding direct management of the centralized control plane and reducing management complexity of the centralized control plane.

In a possible implementation, determining the first network element serving the terminal device includes: determining, based on the location information of the terminal device and/or the first domain identifier, the first network element serving the terminal device. This manner helps improve accuracy of selecting the first network element.

In a possible implementation, determining, based on the location information of the terminal device and/or the first domain identifier, the first network element serving the terminal device includes: sending the location information of the terminal device and/or the first domain identifier to a network repository function network element; and receiving the identifier that is of the first network element serving the terminal device and that is sent by the network repository function network element. Based on this manner, when the control plane network element is abnormal or performs handover, the identifier of the first network element serving the terminal can be obtained.

In a possible implementation, the second session creation request further includes information indicating to allocate an identifier of the terminal device, the second session creation response includes the identifier of the terminal device and an identifier of an edge application server discovery function network element, and the first session creation response includes the identifier of the edge application server discovery function network element. Based on this manner, the terminal device can be associated with the edge application server discovery function network element.

In a possible implementation, before sending the second session creation request to the first network element, the method further includes: determining a second user plane function network element serving the terminal device; creating the first session based on the second user plane function network element; determining an identifier of the terminal device; determining an edge application server discovery function network element based on the location information of the terminal device and/or the first domain identifier; receiving a first session modification request sent by the edge application server discovery function network element, where the first session modification request is used to request to modify a user plane function network element serving the terminal device, and the first session modification request includes an application address and the identifier of the terminal device; and determining, based on the application address, the first network element serving the terminal device. That the second session creation request is used to request to create the first session for the terminal device includes: The second session creation request is used to request to create or modify the user plane function network element serving the terminal device, and create the first session for the terminal device based on a created or modified user plane function network element, where the second session creation request further includes the application address. Based on this manner, the second network element and the first network element separately manage some user plane network elements, so that compatibility with existing deployment can be implemented, and the management complexity of the centralized control plane can be reduced to some extent.

In a possible implementation, receiving the first session creation request includes: receiving the first session creation request that is from an access and mobility management function network element and that is forwarded by the first network element; and sending the first session creation response for the first session creation request includes: sending the first session creation response for the first session creation request to the first network element. Based on this manner, the first network element may be used as an intermediate network element to forward the first session creation request.

In a possible implementation, receiving the first session creation request includes: receiving the first session creation request sent by the first network element; and sending the first session creation response for the first session creation request includes: sending the first session creation response for the first session creation request to the first network element.

According to a second aspect, this application provides an information processing method. The method includes: receiving a second session creation request, where the second session creation request is used to request to create a first session for a terminal device, the second session creation request includes location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device; determining a first user plane function network element serving the terminal device; creating the first session based on the first user plane function network element; and sending a second session creation response for the second session creation request to the second network element.

For beneficial effects of the method provided in the second aspect, refer to descriptions of beneficial effects of the method in the first aspect. Details are not described herein again.

In a possible implementation, receiving the second session creation request includes: receiving the second session creation request sent by the second network element.

In a possible implementation, determining the first user plane function network element serving the terminal device includes: determining, based on the location information of the terminal device and/or the first domain identifier, the first user plane function network element serving the terminal device. This manner helps improve accuracy of selecting the first user plane function network element.

In a possible implementation, the second session creation request further includes information indicating to allocate an identifier of the terminal device, and the method further includes: determining the identifier of the terminal device; and determining an edge application server discovery function network element based on the location information of the terminal device and/or the first domain identifier, where the second session creation response includes the identifier of the terminal device and an identifier of the edge application server discovery function network element.

In a possible implementation, the method further includes: receiving a first session modification request sent by the edge application server discovery function network element, where the first session modification request is used to request to modify a user plane function network element serving the terminal device, and the first session modification request includes an application address and the identifier of the terminal device; determining, based on the application address, a second user plane function network element serving the terminal device; and modifying the first session based on the second user plane function network element. This manner helps improve session creation flexibility.

In a possible implementation, determining, based on the application address, the second user plane function network element serving the terminal device includes: determining the second user plane function network element based on the application address and information about an address to which a user plane function network element managed by the first network element is allowed to connect. This manner helps improve accuracy of selecting the second user plane function network element.

In a possible implementation, that the first network element determines the second user plane function network element based on the application address and the information about the address to which the user plane function network element managed by the first network element is allowed to connect includes: determining the second user plane function network element based on the application address, the information about the address to which the user plane function network element managed by the first network element is allowed to connect, the location information of the terminal device, and/or the identifier of the terminal device. This manner helps improve the accuracy of selecting the second user plane function network element.

In a possible implementation, determining the first user plane function network element serving the terminal device includes: determining, according to an access policy from the second network element or a local policy configured by the first network element, the first user plane function network element serving the terminal device. This manner helps improve session creation efficiency.

In a possible implementation, the method further includes: sending, to the first user plane function network element or the second user plane function network element, the access policy from the second network element and the local policy configured by the first network element. Based on this manner, the access policy and the local policy can be combined.

In a possible implementation, that the second session creation request is used to request to create the first session for the terminal device includes: The second session creation request is used to request to create or modify a user plane function network element serving the terminal device, and create the first session for the terminal device based on a created or modified user plane function network element, where the modified user plane function network element is the first user plane function network element, where the second session creation request further includes an application address. Based on this manner, the second network element and the first network element separately manage some user plane network elements, so that compatibility with existing deployment can be implemented, and the management complexity of the centralized control plane can be reduced to some extent.

In a possible implementation, determining the first user plane function network element serving the terminal device includes: determining, based on the application address, the first user plane function network element serving the terminal device. This manner helps improve the accuracy of selecting the first user plane function network element.

In a possible implementation, before receiving the second session creation request, the method further includes: receiving a first session creation request sent by an access and mobility management function network element, where the first session creation request is used to request to create the first session for the terminal device; determining the second network element; and forwarding the first session creation request to the second network element. After sending the second session creation response for the second session creation request to the second network element, the method further includes: receiving a first session creation response that is sent by the second network element for the first session creation request; and forwarding the first session creation response to the access and mobility management function network element. Based on this manner, the first network element may be used as an intermediate network element to forward the first session creation request.

In a possible implementation, before receiving the second session creation request, the method further includes: receiving a third session creation request sent by an access and mobility management function AMF, where the third session creation request is used to request to create the first session for the terminal device; determining the second network element; and sending a first session creation request to the second network element, where the first session creation request is used to request to create the first session for the terminal device. After sending the second session creation response for the second session creation request to the second network element, the method further includes: receiving a first session creation response that is sent by the second network element for the first session creation request; and sending a third session creation response for the third session creation request to the access and mobility management function network element. Based on this manner, the first network element may process the third session creation request, create the first session creation request, and send the first session creation request to the second network element.

In a possible implementation, determining the second network element includes: determining the second network element based on first information, where the first information includes the location information of the terminal device and information about locations served by all second network elements, or the first information includes the first domain identifier and an identifier of a domain served by all second network elements. This manner helps improve the accuracy of selecting the second network element.

According to a third aspect, this application provides an information processing method. The method includes: receiving a fourth session creation request sent by an access network device, where the fourth session creation request is used to request to create a first session for a terminal device; determining a first network element that provides a session management service for the terminal device; sending a first session creation request or a third session creation request to the first network element, where the first session creation request or the third session creation request is used to request to create the first session for the terminal device; receiving a first session creation response that is forwarded by the first network element for the first session creation request, or receiving a third session creation response that is sent by the first network element for the third session creation request; and sending a fourth session creation response for the fourth session creation request to the access network device.

Based on the method described in the first aspect, an access and mobility management function network element selects, from a plurality of network elements, the first network element serving the terminal device, that is, the first network element performs intra-domain user plane management, so that direct management of a centralized control plane is avoided, and the centralized control plane is unaware of intra-domain deployment of a user plane network element, an application, and the like, thereby reducing management complexity of the centralized control plane.

In a possible implementation, the method further includes: determining a second network element based on first information, where the first information includes location information of the terminal device and information about locations served by all second network elements, or the first information includes a first domain identifier and an identifier of a domain served by all second network elements, the first domain identifier is an identifier of a domain in which the terminal device is located or an identifier of a domain to be accessed by the terminal device, and the first session creation request or the third session creation request further includes an identifier of the second network element. This manner helps improve accuracy of selecting the second network element and save computing resources used by the first network element to determine the second network element.

In a possible implementation, determining the first network element that provides the session management service for the terminal device includes: determining, based on the location information of the terminal device and/or the first domain identifier, the first network element that provides the session management service for the terminal device. This manner helps improve accuracy of selecting the first network element.

According to a fourth aspect, this application provides a communication apparatus. The apparatus may be a second network element, an apparatus in the second network element, or an apparatus that can be used together with the second network element. The communication apparatus may alternatively be a chip system, and the communication apparatus may perform the method performed by the second network element in the first aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the method in the first aspect and the beneficial effects thereof. Repeated parts are not described again.

According to a fifth aspect, this application provides a communication apparatus. The apparatus may be a first network element, an apparatus in the first network element, or an apparatus that can be used together with the first network element. The communication apparatus may alternatively be a chip system, and the communication apparatus may perform the method performed by the first network element in the second aspect, or the communication apparatus may perform the method performed by the first network element in the second aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the method in the second aspect and the beneficial effects thereof. Repeated parts are not described again.

According to a sixth aspect, this application provides a communication apparatus. The apparatus may be an access and mobility management function network element, an apparatus in the access and mobility management function network element, or an apparatus that can be used together with the access and mobility management function network element. The communication apparatus may alternatively be a chip system, and the communication apparatus may perform the method performed by the access and mobility management function network element in the third aspect, or the communication apparatus may perform the method performed by the access and mobility management function network element in the third aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the method in the third aspect and the beneficial effects thereof. Repeated parts are not described again.

According to a seventh aspect, this application provides a communication apparatus. The communication apparatus includes a processor. When the processor invokes a computer program in a memory, the method performed by the second network element, the first network element, or the access and mobility management function network element in the methods according to the first aspect to the third aspect is performed.

According to an eighth aspect, this application provides a communication apparatus. The communication apparatus includes a processor and a memory, the memory is configured to store computer-executable instructions, and the processor is configured to execute the computer-executable instructions stored in the memory, to enable the communication apparatus to perform the method performed by the second network element, the first network element, or the access and mobility management function network element in the methods according to the first aspect to the third aspect.

According to a ninth aspect, this application provides a communication apparatus. The communication apparatus includes a processor, a memory, and a transceiver. The transceiver is configured to receive a signal or send a signal. The memory is configured to store a computer program. The processor is configured to invoke the computer program from the memory to perform the method performed by the second network element, the first network element, or the access and mobility management function network element in the methods according to the first aspect to the third aspect.

According to a tenth aspect, this application provides a communication apparatus. The communication apparatus includes a processor and an interface circuit. The interface circuit is configured to receive computer-executable instructions and transmit the computer-executable instructions to the processor. The processor runs the computer-executable instructions to perform the method performed by the second network element, the first network element, or the access and mobility management function network element in the methods according to the first aspect to the third aspect.

According to an eleventh aspect, this application provides a computer-readable storage medium. The computer-readable storage medium is configured to store computer-executable instructions, and when the computer-executable instructions are executed, the method performed by the second network element, the first network element, or the access and mobility management function network element in the methods according to the first aspect to the third aspect is performed.

According to a twelfth aspect, this application provides a communication apparatus. The communication apparatus includes a function or a unit configured to perform the method according to any one of the first aspect to the third aspect.

According to a thirteenth aspect, this application provides a computer program product including a computer program. When the computer program is executed, the method performed by the second network element, the first network element, or the access and mobility management function network element in the methods according to the first aspect to the third aspect is implemented.

According to a fourteenth aspect, this application provides a communication system. The communication system includes a second network element and a first network element. The second network element is configured to perform the method according to the first aspect, and the first network element is configured to perform the method according to the second aspect.

According to a fifteenth aspect, this application provides a communication system. The communication system includes a second network element, a first network element, and an access and mobility management function network element. The second network element is configured to perform the method according to the first aspect, the first network element is configured to perform the method according to the second aspect, and the access and mobility management function network element is configured to perform the method according to the third aspect.

### BRIEF DESCRIPTION OF DRAWINGS

FIG. 1 is a diagram of creating a session path according to an embodiment of this application;
FIG. 2 is a diagram of a network system architecture according to an embodiment of this application;
FIG. 3 is a diagram of a structure of a CN according to an embodiment of this application;
FIG. 4 is a schematic flowchart of an information processing method according to an embodiment of this application;
FIG. 5 is a schematic flowchart of another information processing method according to an embodiment of this application;
FIG. 6 is a schematic flowchart of determining a first network element serving a terminal device according to an embodiment of this application;
FIG. 7 is a schematic flowchart of another information processing method according to an embodiment of this application;
FIG. 8 is a schematic flowchart of another information processing method according to an embodiment of this application;
FIG. 9 is a schematic flowchart of another information processing method according to an embodiment of this application;
FIG. 10 is a schematic flowchart of another information processing method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system like a 3rd generation partner (3rd generation partner project, 3GPP) service-based network architecture (service-based architecture, SBA), or a communication system evolved after 5G like a 6th generation (6th generation, 6G) communication system.

FIG. 2 is a diagram of a network system architecture according to an embodiment of this application. As shown in FIG. 2, a terminal device may access a wireless network, to obtain a service of an external network (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to connect the terminal device to the wireless network, and the CN is configured to: manage the terminal device and provide a gateway for communicating with the DN. The following separately describes in detail the terminal device, the RAN, the CN, and the DN in the system architecture in FIG. 2.

### 1. Terminal device

The terminal device includes a device that provides voice and/or data connectivity for a user. For example, the terminal device is a device that has a wireless transceiver function, and may be deployed on land, where the deployment includes indoor, outdoor, handheld, wearable, or vehicle-mounted deployment; may be deployed on water (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE agent, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

### 2. RAN

The RAN may include one or more RAN devices (or access network devices). An interface between an access network device and a terminal device may be a Uu interface (or referred to as an air interface). Certainly, in communication evolved after 5G, names of these interfaces may remain unchanged, or may be replaced with other names. This is not limited in this application.

The access network device is a node or a device that connects the terminal device to the wireless network. The access network device includes, for example, but is not limited to, a next-generation NodeB (next-generation NodeB, gNB) in a 5G communication system, an evolved NodeB (evolved NodeB, eNB), a next-generation evolved NodeB (next-generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmission reception point (transmission reception point, TRP), a transmission point (transmission point, TP), a mobile switching center, or a device that functions as a base station in device-to-device (device-to-device, D2D), vehicle-to-everything (vehicle-to-everything, V2X), machine-to-machine (machine-to-machine, M2M) communication; or may include a central unit (central unit, CU) and a distributed unit (distributed unit, DU) in a cloud access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application. The RAN in this application may be a 5G RAN, or may be a 6G RAN. This is not limited in this application.

### 3. CN

The CN may include one or more CN devices (which may be understood as network element devices or functional network elements (network function, NF)).

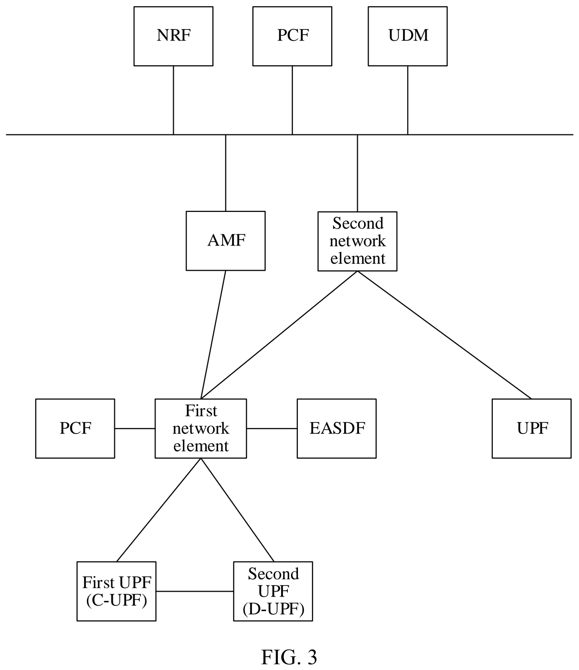

FIG. 3 is a diagram of a structure of a CN according to this application. The CN shown in FIG. 3 includes a plurality of CN devices: an access and mobility management function (access and mobility management function, AMF), a first network element, a second network element, a user plane function (user plane function, UPF), an edge application server discovery function (edge application server discovery function, EASDF), a policy control function (policy control function, PCF), a network repository function (network function repository function, NRF), and a unified data management (unified data management, UDM). Certainly, the CN may further include another functional network element (for example, a session management function (session management function, SMF), a network slice selection function (network slice selection function, NSSF), a network exposure function (network exposure function, NEF), an application function (application function, AF), a network control function (network control function, NCF), an authentication server function (authentication server function, AUSF), a network slice specific authentication and authorization function (network slice specific authentication and authorization function, NSSAAF), a service communication proxy (service communication proxy, SCP), and a network slice admission control function (network slice admission control function, NSACF)). This is not limited herein.

The first network element may be a session management network element, a user plane network element, or a user plane network element that has a function of a session management network element. This is not limited in embodiments of this application. For example, the first network element may be a first SMF, or may be a third UPF. The second network element may be a session management network element, for example, a second SMF. The following describes the SMF and the UPF in detail.

The SMF is a control plane function provided by an operator network, and is responsible for managing a protocol data unit (protocol data unit, PDU) session of the terminal device. The PDU session is a channel used to transmit a PDU, and the terminal device and the DN need to transmit the PDU to each other through the PDU session. The SMF may be responsible for establishment, maintenance, deletion, and the like of the PDU session. The SMF may include the first SMF and the second SMF.

The first SMF has functions such as managing a user plane network element (for example, a first UPF or a second UPF), for example, selecting a user plane network element for a user session, creating a user plane forwarding path (for example, a tunnel between the first UPF, the second UPF, and a RAN), and configuring a forwarding policy for the user plane network element; receiving a user session-related policy configured by the second SMF, and delivering the policy to the user plane network element; sending user plane information, such as user session-related statistics information, to the second SMF; obtaining a user policy from a PCF (configured to record policy information such as a user/an application/network quality of service), generating a user plane policy, and delivering the user plane policy to the user plane network element; configuring a DNS processing policy for the EASDF, selecting a user plane network element for a user based on an application address returned by the EASDF, creating a forwarding path or policy, and the like; and providing an EASDF address corresponding to the user session for the second SMF. The first SMF may be managed by the second SMF. The first SMF herein may be referred to as a D-SMF, or may be represented by using another name. This is not limited herein.

The second SMF has session-related functions such as session management (for example, session creation, modification, and release, including tunnel maintenance between the UPF and the RAN), selection and control of the UPF, service and session continuity (service and session continuity, SSC) mode selection, and roaming. In addition, the second SMF is further responsible for managing the first SMF, including selecting the first SMF, configuring a user session-related policy (for example, an address accessed by a user and a forwarding policy) for the first SMF, and receiving user session-related information (such as user plane statistics information) from the first SMF.

The UPF is a user plane function provided by an operator, and is mainly responsible for functions related to routing and forwarding of a user plane data packet of a core network. The UPF may include the first UPF, the second UPF, and the third UPF, indicating UPFs of different purposes in a session.

The first UPF may be used as an offloading network element, that is, a UPF that implements a function of an uplink classifier (uplink classifier). To activate offloading, the first UPF may be inserted into the user session by the first SMF. The first UPF is connected to the second UPF through an N9 interface. For uplink traffic, data packets of different services from a user are offloaded to different paths after being identified according to an offloading rule. For downlink traffic, packets sent to a user are aggregated, and the packets are forwarded to the access network device through an N3 interface. The first UPF herein may be referred to as a D-UPF, or may be represented by using another name. This is not limited herein.

The second UPF may be used as an anchor between a radio access network and the DN, and is configured to encapsulate and decapsulate a tunnel protocol of a user plane, and provide mobility during radio access. The second UPF herein may be referred to as a C-UPF, or may be represented by using another name. This is not limited herein.

Certainly, alternatively, the first UPF may be used as an anchor between the radio access network and the DN, for example, a C-UPF, and the second UPF is used as an offloading network element, for example, a D-UPF. This is not limited herein.

The third UPF may be used as a UPF that has a function of a session management network element. For example, the third UPF has functions such as selecting a user plane network element for a user session, creating a user plane forwarding path, and configuring a forwarding policy for the user plane network element; receiving a user session-related policy configured by the second SMF, and delivering the policy to the user plane network element; sending user plane information, such as statistics information related to the user session, to the second SMF; obtaining a user policy from a PCF, generating a user plane policy, and delivering the user plane policy to the user plane network element; configuring a DNS processing policy for the EASDF, selecting a user plane network element for a user based on an application address returned by the EASDF, creating a forwarding path or policy, and the like; and providing an EASDF address corresponding to the user session for the second SMF.

The following describes other functional network elements in detail.

The AMF is a control plane function provided by the operator network, and is responsible for access control and mobility management for accessing the operator network by the terminal device, for example, including functions such as mobility status management, allocation of a temporary user identity, and user authentication and authorization.

The EASDF is mainly configured to: add address information to a user domain name system (domain name system, DNS) request, request an address from a local DNS server, and send address information of an application to the first SMF or the second SMF, to trigger the first SMF to select a user plane network element for a user and create a forwarding path or policy, or trigger the second SMF to select the first SMF for a user to select a user plane network element and create a forwarding path or policy, or the like.

The PCF is a control plane function provided by the operator, including a user subscription data management function, a policy control function, a charging policy control function, quality of service (quality of service, QoS) control, and the like, and is mainly configured to provide a PDU session policy for the SMF. The policy may include a charging-related policy, a QoS-related policy, an authorization-related policy, and the like. A PCF used for mobility management (mobility management, AM) may be referred to as an AM-PCF, and a PCF used for session management (session management, SM) may be referred to as an SM-PCF.

The NRF is a network repository function and may support a server discovery function. A network element "discovery" request is received from a network element function or a service communication agent, and information about the "discovered" network element function can be fed back. In addition, the NRF network element function is further responsible for maintaining information about available network functions and services supported by the available network functions.

The UDM is mainly configured to: manage subscription data and authentication data of a user, and perform authentication credit processing, user identifier processing, access authorization, registration/mobility management, subscription management, short message service management, and the like. In some embodiments, the UDM may further include a unified data repository (unified data repository, UDR). Alternatively, in some other embodiments, a 3GPP SBA in a 5G system may further include a UDR. The UDR is configured to: store and retrieve a PCF policy, store and retrieve structured data for exposure, store user information requested by the application function, and the like.

It should be noted that the CN devices may also be referred to as network elements or functional network elements. In a 5G communication system, functional network elements may have names of the functional network elements shown in FIG. 3. In a communication system (for example, a 6G communication system) evolved after 5G, functional network elements may still have the names of the functional network elements shown in FIG. 3, or may have other names. For example, in the 5G communication system, a user plane function may be a UPF. In the communication system (for example, the 6G communication system) evolved after 5G, the user plane function may still be the UPF, or may have another name. This is not limited in this application.

It should be further noted that, in the 5G communication system, functions implemented by the functional network elements may be independent as shown in FIG. 3. In the communication system evolved after 5G (for example, the 6G communication system), the functional network elements may still be in an independent state as shown in FIG. 3, or functions of a plurality of functional network elements in FIG. 3 may be implemented by an integrated functional network element. For example, in the 5G communication system, a function related to a user plane is implemented by a UPF, and a function related to access and mobility management is implemented by an AMF. In the communication system (for example, the 6G communication system) evolved after 5G, the function related to the user plane may still be implemented by the UPF, and the function related to the access and mobility management may still be implemented by the AMF, or an integrated function network element may implement both the function related to the user plane and the function related to the access and mobility management. This is not limited in this application.

### 4. DN

The DN, also be referred to as a packet data network (packet data network, PDN), is a network located outside an operator network. The operator network may access a plurality of DNs. Application servers corresponding to a plurality of services may be deployed in the DN, to provide a plurality of possible services for the terminal device.

To better understand the solutions provided in this application, the following first describes content delivery network (content delivery network, CDN) addressing.

The CDN avoids bottlenecks and links that may affect a data transmission speed and stability on the Internet, so that content transmission is faster and more stable. The CDN caches website content at a network edge (that is, a location closest to a location at which a user accesses a network). When the user accesses the website content, the CDN routes a user request to a cache server closest to the location at which the user accesses the network or a cache server with the optimal access effect through a scheduling system, and the cache server provides content services for the user. Compared with direct access to an origin server, this manner shortens a network distance between the user and the content, thus achieving acceleration.

Therefore, when an application is deployed near a location of the user, the network can help the user find a nearby application and create a path as short as possible to access the application, thereby reducing access latency. A specific implementation may be as follows: A session anchor UPF is first determined, and a tunnel between the access network device and the session anchor UPF is established. Then, an offloading UPF is determined based on a user access requirement, and a tunnel between the access network device, the offloading UPF, and the session anchor UPF is created. Subsequently, the access network device sends an uplink packet to the offloading UPF. The session anchor UPF also sends, to the offloading UPF through the tunnel, a received packet sent to the terminal device, and creates an offloading policy on the offloading UPF, that is, sends a packet sent to an application to the cache server. In this way, the user request is routed to the cache server closest to the location at which the user accesses the network or the cache server with the optimal access effect.

To reduce management complexity of a centralized control plane, this application provides an information processing method and a communication apparatus. The following further describes in detail the information processing method and the communication apparatus provided in embodiments of this application.

In embodiments of this application, the first network element may be a session management network element, a user plane network element, or a user plane network element that has a function of a session management network element. This is not limited in embodiments of this application. For example, the first network element may be a first SMF, or the first network element may be a third UPF. Certainly, the second network element may alternatively be a session management network element, for example, a second SMF.

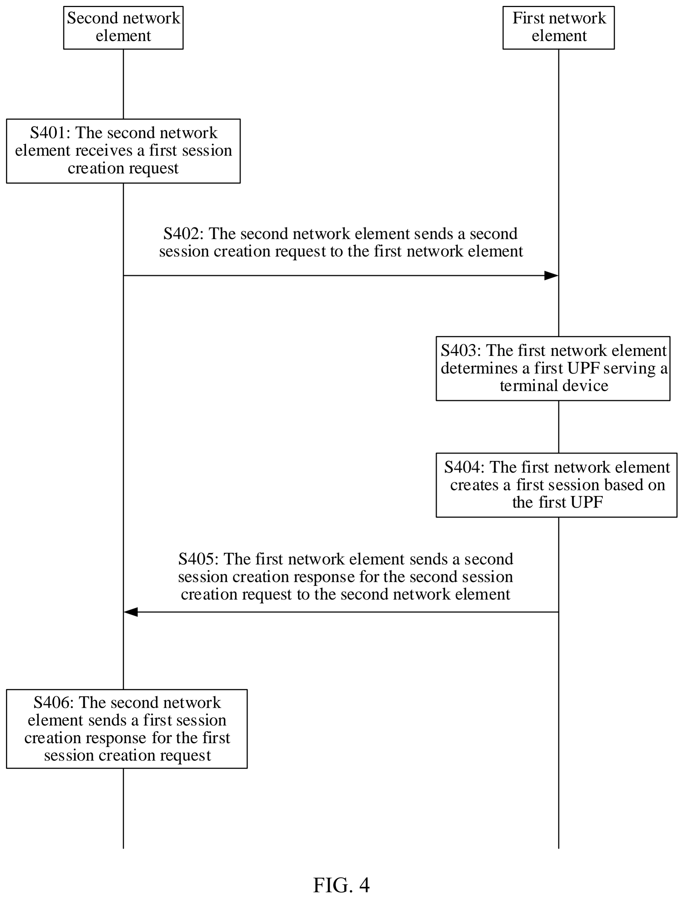

FIG. 4 is a schematic flowchart of an information processing method according to an embodiment of this application. As shown in FIG. 4, the information processing method includes the following steps S401 to S406. The method shown in FIG. 4 may be performed by a first network element and a second network element. Alternatively, the method shown in FIG. 4 may be performed by a device or a chip having a first network element and a second network element. This is not limited in this embodiment of this application. FIG. 4 is described by using an example in which the method is performed by a first network element and a second network element. In this embodiment of this application, an example in which the first network element is a first SMF and the second network element is a second SMF is used.

S401: The second network element receives a first session creation request.

In this embodiment of this application, the first session creation request is used to request to create a first session for a terminal device. The session refers to a temporary and interactive information exchange between two or more communication devices. For example, the second network element may receive a first session creation request sent by an AMF, or the second network element may receive a first session creation request forwarded by the first network element, or the second network element may receive a first session creation request sent by the first network element. This is not limited herein.

Optionally, the first session creation request includes a tunnel identifier of an access network device.

S402: The second network element sends a second session creation request to the first network element. Correspondingly, the first network element may receive the second session creation request.

In this embodiment of this application, the second session creation request is used to request to create the first session for the terminal device, the second session creation request includes location information of the terminal device and/or a first domain identifier, and the first domain identifier is an identifier of a domain in which the terminal device is located or an identifier of a domain to be accessed by the terminal device. The first network element may be a network element that is determined by the second network element and that is configured to serve the terminal device, or the first network element may be a network element that is determined by the AMF and that is configured to serve the terminal device, or the first network element may be a network element that is determined by another control plane network element and that is configured to serve the terminal device. This is not limited herein. The second network element sends the second session creation request to the first network element, so that the first network element performs intra-domain user plane management, thereby avoiding direct management of a centralized control plane, and reducing management complexity of the centralized control plane.

In a possible implementation, the first network element is a network element that provides a session management service and/or a data forwarding service. Certainly, the first network element may alternatively be a network element that provides another service for the terminal device. This is not limited herein.

In a possible implementation, the method further includes: The second network element sends, to a unified data management function network element, an identifier of the first network element serving the terminal device. Correspondingly, the unified data management function network element may receive the identifier of the first network element. In other words, the second network element may send the identifier of the first network element serving the terminal device to the unified data management function network element (namely, the UDM) for storage, so that when querying the second network element corresponding to the terminal device, another network element can obtain the identifier of the first network element serving the terminal device, and can send an instruction to the first network element.

S403: The first network element determines a first UPF serving the terminal device.

In this embodiment of this application, the first UPF may be used as an anchor (a session anchor UPF, for example, a C-UPF) between a radio access network and a DN, or may be used as an offloading network element (an offloading UPF, for example, a D-UPF).

S404: The first network element creates the first session based on the first UPF.

In this embodiment of this application, when the first UPF is used as a session anchor UPF, the first network element may first create the first session based on the first UPF, and then determine an offloading UPF based on a user access requirement, to modify the first session based on the offloading UPF. When the first UPF is used as an offloading UPF, the first network element may directly determine the first UPF according to an access policy or a local policy, to create the first session based on the first UPF.

S405: The first network element sends a second session creation response for the second session creation request to the second network element. Correspondingly, the second network element may receive the second session creation response.

In a possible implementation, the second session creation response may indicate that creation of the first session is completed.

S406: The second network element sends a first session creation response for the first session creation request.

In this embodiment of this application, when the second network element receives the first session creation request sent by the AMF, the second network element may send the first session creation response to the AMF. When the second network element receives the first session creation request forwarded by the first network element, or the second network element receives the first session creation request sent by the first network element, the second network element may send the first session creation response to the first network element. This is not limited herein.

In a possible implementation, the first session creation response may indicate that creation of the first session is completed.

In the method described in FIG. 4, a control plane network element selects, from a plurality of network elements, the first network element serving the terminal device, that is, the first network element performs intra-domain user plane management, so that the direct management of the centralized control plane is avoided, and the centralized control plane is unaware of intra-domain deployment of a user plane network element, an application, and the like, thereby reducing the management complexity of the centralized control plane.

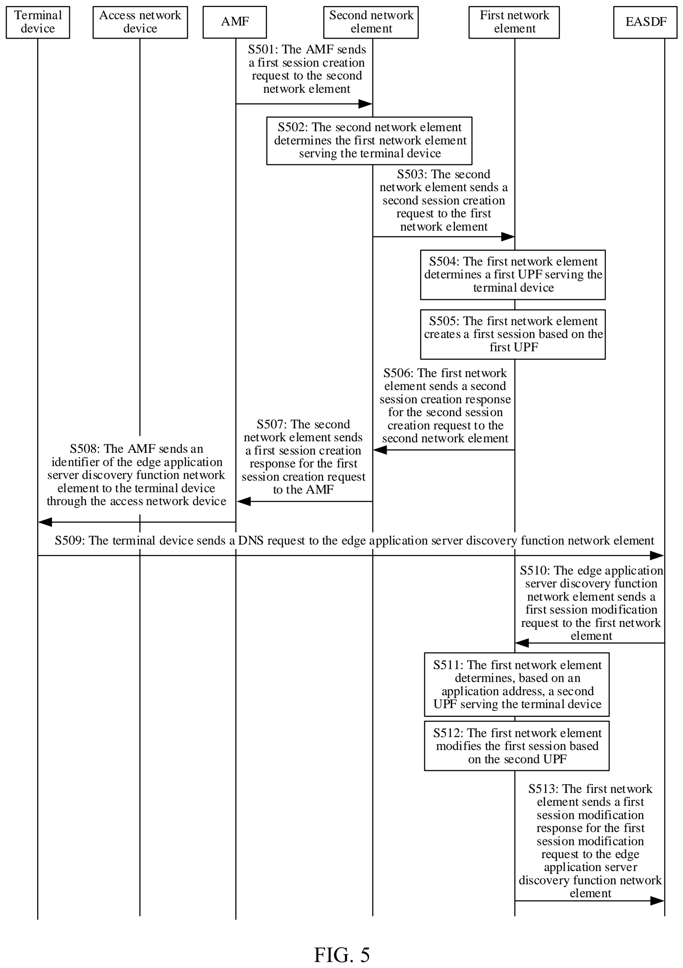

FIG. 5 is a schematic flowchart of another information processing method according to an embodiment of this application. As shown in FIG. 5, the information processing method includes the following steps S501 to S513. Step S501 is a specific implementation of step S401. The method shown in FIG. 5 may be performed by a terminal device, an access network device, an AMF, a first network element, a second network element, and an edge application server discovery function network element. Alternatively, the method shown in FIG. 5 may be performed by a device or a chip having a terminal device, an access network device, an AMF, a first network element, a second network element, and an edge application server discovery function network element. This is not limited in this embodiment of this application. FIG. 5 is described by using an example in which the method is performed by the terminal device, the access network device, the AMF, the first network element, the second network element, and the edge application server discovery function network element. In this embodiment of this application, an example in which the first network element is a first SMF and the second network element is a second SMF is used.

S501: The AMF sends a first session creation request to the second network element. Correspondingly, the second network element may receive the first session creation request.

In this embodiment of this application, the second network element receives the first session creation request sent by the AMF.

Optionally, the first session creation request includes a tunnel identifier of an access network device.

S502: The second network element determines the first network element serving the terminal device.

In this embodiment of this application, the second network element may select, from a plurality of managed network elements, the first network element serving the terminal device, that is, the first network element performs intra-domain user plane management. This avoids direct management of a centralized control plane, so that the centralized control plane can be unaware of intra-domain deployment and service change, thereby reducing management complexity of the centralized control plane.

In a possible implementation, the first network element is a network element that provides a session management service and/or a data forwarding service.

In a possible implementation, a specific implementation in which the second network element determines the first network element serving the terminal device may be: determining, based on location information of the terminal device and/or a first domain identifier, the first network element serving the terminal device. This manner helps improve accuracy of selecting the first network element.

The location information of the terminal device may be obtained by the second network element from the first session creation request, or may be obtained from another network element. This is not limited herein. In addition, the first domain identifier is an identifier of a domain in which the terminal device is located or an identifier of a domain to be accessed by the terminal device. When the first domain identifier is an identifier (for example, a data network identifier (data network name, DNN) or a network slice (single network slice selection assistance information, S-NSSAI)) of a domain to be accessed by the terminal device, the second network element may obtain the first domain identifier from the first session creation request. When the first domain identifier is an identifier (for example, a data network access identifier (data network access identifier, DNAI)) of a domain in which the terminal device is located, the second network element may obtain the first domain identifier from another network element (for example, a PCF). This is not limited herein.

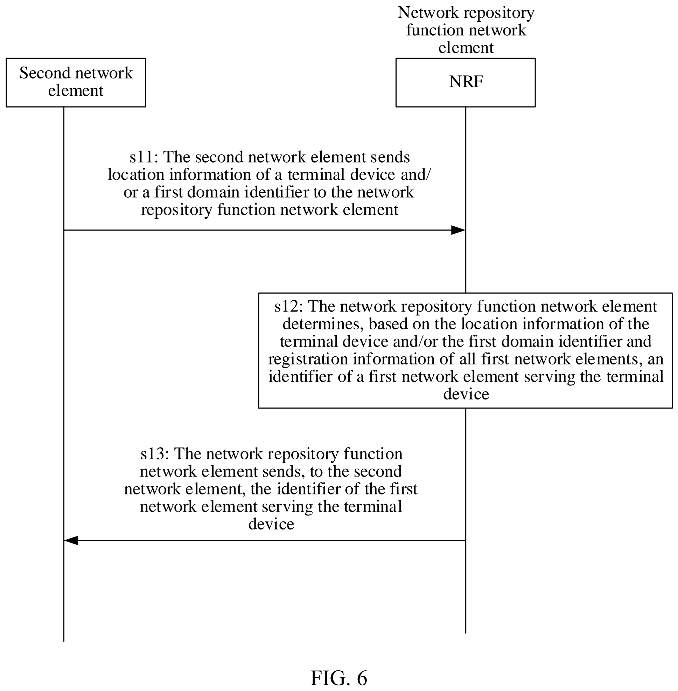

Optionally, when the second network element determines, based on the location information of the terminal device and/or the first domain identifier, the first network element serving the terminal device, a specific implementation may include the following steps s11 to s13. Refer to FIG. 6. Based on this manner, when a control plane network element is abnormal or performs handover, the identifier of the first network element serving the terminal can be obtained.

s11: The second network element sends the location information of the terminal device and/or the first domain identifier to a network repository function network element. Correspondingly, the network repository function network element may receive the location information of the terminal device and/or the first domain identifier.

s12: The network repository function network element determines, based on the location information of the terminal device and/or the first domain identifier and registration information of all first network elements, an identifier of a first network element serving the terminal device.

s13: The network repository function network element sends, to the second network element, the identifier of the first network element serving the terminal device. Correspondingly, the second network element may receive the identifier of the first network element.

It should be noted that a plurality of network elements register with a network repository function network element (namely, an NRF) in advance. Registration information of the network element may include one or more of the following information: a device type of the network element, a set of locations served by a managed UPF, a DNN set, an S-NSSAI set, a DNAI identifier set, a DNAI prefix set, an address space set, and a capability set (whether an Internet egress exists, whether cross-domain communication is allowed, and the like). The second network element provides the location information of the terminal device and/or the first domain identifier for the NRF, so that the NRF determines, based on the registration information of all the network elements and the location information of the terminal device and/or the first domain identifier provided by the second network element, one or more first network elements that can serve the terminal device. A specific selection policy may be selecting a DNN set, an S-NSSAI set, or a DNAI identifier set that includes the first domain identifier, or selecting a set that is of locations served by a managed UPF and that includes the location information of the terminal device, or the like. This is not limited herein.

Further, if the NRF determines one first network element that can serve the terminal device, the NRF may send an identifier (for example, identifier-type information such as a device identifier and/or a device address) of the first network element to the second network element. If the NRF determines a plurality of first network elements that can serve the terminal device, the NRF may select an identifier of one first network element from the plurality of first network elements and send the identifier to the second network element, or the NRF may select identifiers of a plurality of first network elements from the plurality of first network elements and send the identifiers to the second network element, to ensure that a requirement of the terminal device can be met only when capabilities of a plurality of second network elements are combined.

In a possible implementation, the method further includes: The second network element sends, to a unified data management function network element, an identifier of the first network element serving the terminal device. Correspondingly, the unified data management function network element may receive the identifier of the first network element.

S503: The second network element sends a second session creation request to the first network element. Correspondingly, the first network element may receive the second session creation request.

In this embodiment of this application, the first network element is a network element that is determined by the second network element and that is configured to serve the terminal device.

Optionally, the second session creation request further includes information indicating to allocate an identifier of the terminal device. The identifier of the terminal device may be an address of the terminal device.

Optionally, the second session creation request further includes information indicating the first network element to select a first UPF.

Optionally, the second session creation request further includes the tunnel identifier of the access network device.

Optionally, when there are a plurality of identifiers of domains to be accessed by the terminal device, the first domain identifier is an identifier of a part of the plurality of domains to be accessed by the terminal device. In other words, when the terminal device needs to access a plurality of domains, the currently determined first network element manages only the part of the domains.

S504: The first network element determines a first UPF serving the terminal device.

In this embodiment of this application, the first UPF is used as an anchor (for example, a C-UPF) between a radio access network and a DN.

In a possible implementation, a specific implementation in which the first network element determines the first UPF serving the terminal device may be: determining, based on the location information of the terminal device and/or the first domain identifier, the first UPF serving the terminal device. This manner helps improve accuracy of selecting the first UPF.

S505: The first network element creates a first session based on the first UPF.

In a possible implementation, the method further includes: The first network element determines a tunnel identifier of the first UPF. The tunnel identifier of the first UPF may be determined in one of the following two manners.

Manner 1: The first network element allocates the tunnel identifier of the first UPF.

Manner 2: The first network element sends, to the first UPF, information indicating to allocate the tunnel identifier of the first UPF. Correspondingly, the first UPF may receive the information indicating to allocate the tunnel identifier of the first UPF, and allocate the tunnel identifier of the first UPF. The first UPF may send the tunnel identifier of the first UPF to the first network element. Correspondingly, the first network element may receive the tunnel identifier of the first UPF.

Optionally, a specific implementation in which the first network element creates the first session based on the first UPF may include the following steps s21 to s24.

s21: The first network element sends the tunnel identifier of the access network device to the first UPF. Correspondingly, the first UPF may receive the tunnel identifier of the access network device.

s22: The first network element sends the tunnel identifier of the first UPF to the second network element. Correspondingly, the second network element may receive the tunnel identifier of the first UPF.

s23: The second network element sends the tunnel identifier of the first UPF to the AMF. Correspondingly, the AMF may receive the tunnel identifier of the first UPF.

s24: The AMF sends the tunnel identifier of the first UPF to the access network device. Correspondingly, the access network device may receive the tunnel identifier of the first UPF.

A sequence of performing step s21 and step s22 is not limited, and step s21 and step s22 may alternatively be performed simultaneously.

In a possible implementation, the method further includes: The first network element determines the identifier of the terminal device, and the first network element determines an edge application server discovery function network element (namely, an EASDF) based on the location information of the terminal device and/or the first domain identifier.

Optionally, the first network element may determine the identifier of the terminal device in one of the following two manners.

Manner 1: The first network element allocates the identifier of the terminal device.

Manner 2: The first network element sends, to the first UPF, information indicating to allocate the identifier of the terminal device. Correspondingly, the first UPF may receive the information indicating to allocate the identifier of the terminal device, and allocate the identifier of the terminal device. The first UPF may send the identifier of the terminal device to the first network element, and correspondingly, the first network element may receive the identifier of the terminal device.

Optionally, the method further includes: The first network element sends the identifier of the terminal device to the edge application server discovery function network element. Based on this manner, the identifier of the terminal device is associated with the first network element on the edge application server discovery function network element, so that the edge application server discovery function network element can send a session request to the first network element.

S506: The first network element sends a second session creation response for the second session creation request to the second network element. Correspondingly, the second network element may receive the second session creation response.

In a possible implementation, the second session creation response includes the identifier of the terminal device and an identifier of the edge application server discovery function network element. The identifier of the edge application server discovery function network element is sent by the second network element to the AMF, and the AMF sends the identifier of the edge application server discovery function network element to the terminal device through the access network device, so that the terminal device can send a DNS request to the edge application server discovery function network element.

In a possible implementation, the second session creation response may indicate that creation of the first session is completed.

S507: The second network element sends a first session creation response for the first session creation request to the AMF. Correspondingly, the AMF may receive the first session creation response.

In a possible implementation, the first session creation response may indicate that creation of the first session is completed.

In a possible implementation, the first session creation response includes the identifier of the edge application server discovery function network element.

S508: The AMF sends the identifier of the edge application server discovery function network element to the terminal device through the access network device. Correspondingly, the terminal device may receive the identifier of the edge application server discovery function network element.

S509: The terminal device sends the DNS request to the edge application server discovery function network element. Correspondingly, the edge application server discovery function network element may receive the DNS request.

S510: The edge application server discovery function network element sends a first session modification request to the first network element. Correspondingly, the first network element may receive the first session modification request.

In this embodiment of this application, the edge application server discovery function network element has been associated with the second network element. After receiving the DNS request, the edge application server discovery function network element obtains an application address from a DNS server, and then sends the first session modification request to the first network element. The first session modification request is used to request to modify a UPF serving the terminal device, and the first session modification request includes the application address and the identifier of the terminal device. The first network element may subsequently insert an offloading UPF (that is, a second UPF) based on a user application access requirement, to complete modification of the first session.

S511: The first network element determines, based on the application address, the second UPF serving the terminal device.

In this embodiment of this application, the second UPF is used as an offloading network element (for example, a D-UPF).

In a possible implementation, a specific implementation in which the first network element determines, based on the application address, the second UPF serving the terminal device may be: determining the second UPF based on the application address and information about an address to which a UPF managed by the first network element is allowed to connect. For example, if the information about the address to which the UPF managed by the first network element is allowed to connect includes the application address, the UPF may be determined as the second UPF. This manner helps improve accuracy of selecting the second UPF.

Optionally, that the first network element determines the second UPF based on the application address and the information about the address to which the UPF managed by the first network element is allowed to connect includes: determining the second UPF based on the application address, the information about the address to which the UPF managed by the first network element is allowed to connect, the location information of the terminal device, and/or the identifier of the terminal device. For example, when the information about the address to which the UPF managed by the first network element is allowed to connect includes the application address, and a distance between the UPF and the terminal device and/or a distance between the UPF and an application are/is less than a preset threshold, the UPF may be determined as the second UPF.

In a possible implementation, the method further includes: The first network element sends, to the first UPF or the second UPF, an access policy from the second network element and a local policy configured by the first network element. The local policy may be obtained from a local AM-PCF, or may be locally configured. This is not limited herein. The access policy from the second network element and the local policy configured by the first network element may be application information to be accessed by the terminal device, a domain identifier to be accessed by the terminal device, or the like. Based on this manner, the access policy and the local policy can be combined.

S512: The first network element modifies the first session based on the second UPF.

In a possible implementation, the method further includes: The first network element determines an uplink tunnel identifier and a downlink tunnel identifier of the second UPF. The uplink tunnel identifier and the downlink tunnel identifier of the second UPF may be determined in one of the following two manners.

Manner 1: The first network element allocates the uplink tunnel identifier and the downlink tunnel identifier of the second UPF.

Manner 2: The first network element sends, to the second UPF, information indicating to allocate the uplink tunnel identifier and the downlink tunnel identifier of the second UPF. Correspondingly, the second UPF may receive the information indicating to allocate the uplink tunnel identifier and the downlink tunnel identifier of the second UPF, and allocate the uplink tunnel identifier and the downlink tunnel identifier of the second UPF. The second UPF may send the uplink tunnel identifier and the downlink tunnel identifier of the second UPF to the first network element. Correspondingly, the first network element may receive the uplink tunnel identifier and the downlink tunnel identifier of the second UPF.

Optionally, a specific implementation in which the first network element modifies the first session based on the second UPF may include the following steps s31 to s35.

s31: The first network element sends the tunnel identifier of the access network device, the tunnel identifier of the first UPF, and an offloading policy to the second UPF. Correspondingly, the second UPF may receive the tunnel identifier of the access network device, the tunnel identifier of the first UPF, and the offloading policy. For example, the offloading policy may be sending a packet sent to an application to a third UPF or a local network.

s32: The first network element sends the uplink tunnel identifier of the second UPF to the second network element. Correspondingly, the second network element may receive the uplink tunnel identifier of the second UPF.

s33: The second network element sends the uplink tunnel identifier of the second UPF to the AMF. Correspondingly, the AMF may receive the uplink tunnel identifier of the second UPF.

s34: The AMF sends the uplink tunnel identifier of the second UPF to the access network device. Correspondingly, the access network device may receive the uplink tunnel identifier of the second UPF. Subsequently, the access network device sends an uplink packet to the second UPF.

s35: The first network element sends the downlink tunnel identifier of the second UPF to the first UPF. Correspondingly, the first UPF may receive the downlink tunnel identifier of the second UPF. Subsequently, a packet that is sent to the terminal device and that is received by the first UPF is sent to the second UPF through a tunnel.

A sequence of performing step s32 and step s35 is not limited, and step s32 and step s35 may alternatively be performed simultaneously.

S513: The first network element sends a first session modification response for the first session modification request to the edge application server discovery function network element. Correspondingly, the edge application server discovery function network element may receive the first session modification response.

In a possible implementation, the first session modification response indicates that modification of the first session is completed.

In the method described in FIG. 5, the second network element selects, from the plurality of network elements, the first network element serving the terminal device, that is, the first network element performs intra-domain user plane management. The first network element first selects a managed user plane network element for the terminal device as an anchor UPF (that is, the first UPF), creates the first session based on the first UPF, then selects a managed user plane network element as an offloading UPF (that is, the second UPF) based on a user access requirement, and modifies the first session based on the second UPF, that is, inserts an offloading network element based on a user application access requirement. This helps improve session creation flexibility, and direct management of a centralized control plane is avoided, so that the centralized control plane is unaware of intra-domain deployment of a user plane network element, an application, and the like, thereby reducing management complexity of the centralized control plane.

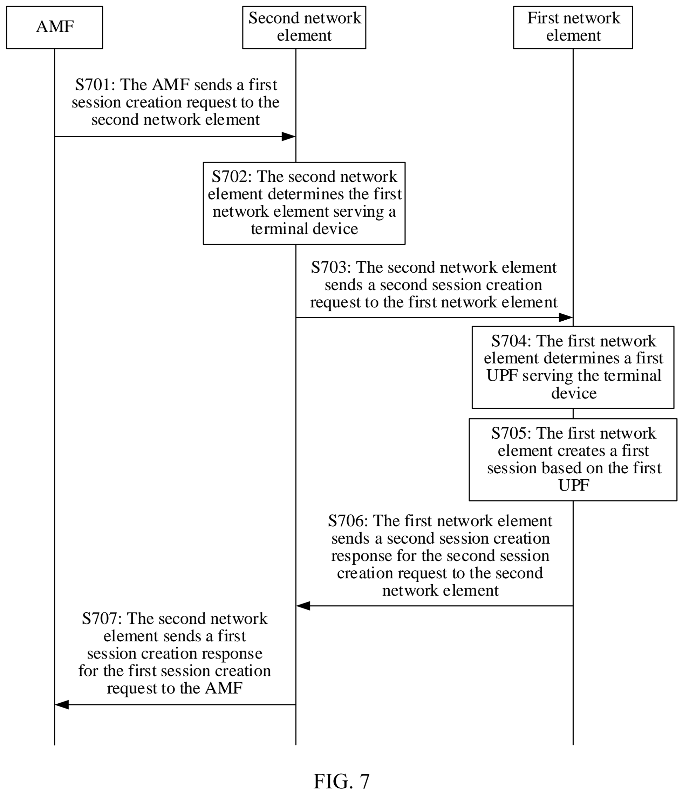

FIG. 7 is a schematic flowchart of another information processing method according to an embodiment of this application. As shown in FIG. 7, the information processing method includes the following steps S701 to S707. Step S701 is a specific implementation of step S401. The method shown in FIG. 7 may be performed by a terminal device, an access network device, an AMF, a first network element, and a second network element. Alternatively, the method shown in FIG. 7 may be performed by a device or a chip having a terminal device, an access network device, an AMF, a first network element, and a second network element. This is not limited in this embodiment of this application. FIG. 7 is described by using an example in which the method is performed by the terminal device, the access network device, the AMF, the first network element, and the second network element. For example, the first network element is a first SMF, and the second network element is a second SMF.

S701: The AMF sends a first session creation request to the second network element. Correspondingly, the second network element may receive the first session creation request.

In this embodiment of this application, the second network element receives the first session creation request sent by the AMF.

Optionally, the first session creation request includes a tunnel identifier of the access network device.

S702: The second network element determines the first network element serving the terminal device.

S703: The second network element sends a second session creation request to the first network element. Correspondingly, the first network element may receive the second session creation request.

For specific implementations of steps S701 to S703, refer to the specific implementations of steps S501 to S503. Details are not described herein again.

S704: The first network element determines a first UPF serving the terminal device.

In this embodiment of this application, the first UPF is used as an offloading network element (for example, a D-UPF). In other words, the first network element may directly insert the offloading UPF in a session creation process, to reduce a session modification process, thereby improving session creation efficiency.

In a possible implementation, the method further includes: The first network element determines a second UPF serving the terminal device. The second UPF is used as an anchor (for example, a C-UPF) between a radio access network and a DN. The first UPF is used as a user plane network element inserted between the access network device and the second UPF.

In a possible implementation, a specific implementation in which the first network element determines the first UPF serving the terminal device may be: determining, according to an access policy from the second network element or a local policy configured by the first network element, the first UPF serving the terminal device.

In a possible implementation, a specific implementation in which the first network element determines the second UPF serving the terminal device may be: determining, based on the location information of the terminal device and/or the first domain identifier, the first UPF serving the terminal device.

In a possible implementation, the method further includes: The first network element sends, to the first UPF or the second UPF, the access policy from the second network element and the local policy configured by the first network element.

S705: The first network element creates a first session based on the first UPF.

In a possible implementation, the method further includes: The first network element determines an uplink tunnel identifier and a downlink tunnel identifier of the first UPF. The uplink tunnel identifier and the downlink tunnel identifier of the first UPF may be determined in one of the following two manners.

Manner 1: The first network element allocates the uplink tunnel identifier and the downlink tunnel identifier of the first UPF.

Manner 2: The first network element sends, to the first UPF, information indicating to allocate the uplink tunnel identifier and the downlink tunnel identifier of the first UPF. Correspondingly, the first UPF may receive the information indicating to allocate the uplink tunnel identifier and the downlink tunnel identifier of the first UPF, and allocate the uplink tunnel identifier and the downlink tunnel identifier of the first UPF. The first UPF may send the uplink tunnel identifier and the downlink tunnel identifier of the first UPF to the first network element. Correspondingly, the first network element may receive the uplink tunnel identifier and the downlink tunnel identifier of the first UPF.

In a possible implementation, the method further includes: The first network element determines a tunnel identifier of the second UPF. The tunnel identifier of the second UPF may be determined in one of the following two manners.

Manner 1: The first network element allocates the tunnel identifier of the second UPF.

Manner 2: The first network element sends, to the second UPF, information indicating to allocate the tunnel identifier of the second UPF. Correspondingly, the second UPF may receive the information indicating to allocate the tunnel identifier of the second UPF, and allocate the tunnel identifier of the second UPF. The second UPF may send the tunnel identifier of the second UPF to the first network element. Correspondingly, the first network element may receive the tunnel identifier of the second UPF.

Optionally, a specific implementation in which the first network element creates the first session based on the first UPF may include the following steps s41 to s45.

s41: The first network element sends the tunnel identifier of the access network device, the tunnel identifier of the second UPF, and an offloading policy to the first UPF. Correspondingly, the first UPF may receive the tunnel identifier of the access network device, the tunnel identifier of the second UPF, and the offloading policy. For example, the offloading policy is sending an uplink packet with a specified feature to a local network, and sending a packet with another specified feature to the second UPF.

s42: The first network element sends the downlink tunnel identifier of the first UPF to the second UPF. Correspondingly, the second UPF may receive the downlink tunnel identifier of the first UPF.

s43: The first network element sends the uplink tunnel identifier of the first UPF to the second network element. Correspondingly, the second network element may receive the uplink tunnel identifier of the first UPF.

s44: The second network element sends the uplink tunnel identifier of the first UPF to the AMF. Correspondingly, the AMF may receive the uplink tunnel identifier of the first UPF.

s45: The AMF sends the uplink tunnel identifier of the first UPF to the access network device. Correspondingly, the access network device may receive the uplink tunnel identifier of the first UPF.

A sequence of performing step s42 and step s43 is not limited, and step s42 and step s43 may alternatively be performed simultaneously.

In a possible implementation, the method further includes: The first network element determines an identifier of the terminal device. The identifier of the terminal device may be determined in one of the following two manners.

Manner 1: The first network element allocates the identifier of the terminal device.

Manner 2: The first network element sends, to the second UPF, information indicating to allocate the identifier of the terminal device. Correspondingly, the second UPF may receive the information indicating to allocate the identifier of the terminal device, and allocate the identifier of the terminal device. The second UPF may send the identifier of the terminal device to the first network element. Correspondingly, the first network element may receive the identifier of the terminal device.

S706: The first network element sends a second session creation response for the second session creation request to the second network element. Correspondingly, the second network element may receive the second session creation response.

In a possible implementation, the second session creation response includes the identifier of the terminal device.

In a possible implementation, the second session creation response indicates that creation of the first session is completed.

S707: The second network element sends a first session creation response for the first session creation request to the AMF. Correspondingly, the AMF may receive the first session creation response.

In a possible implementation, the first session creation response indicates that creation of the first session is completed.

In the method described in FIG. 7, the second network element selects, from a plurality of network elements, the first network element serving the terminal device, that is, the first network element performs intra-domain user plane management. The first network element may directly select, for the terminal device according to the access policy or the local policy, a managed user plane network element as an offloading UPF (namely, the first UPF), to create the first session based on the first UPF. In other words, an offloading network element is inserted in a session creation process. This helps improve session creation efficiency, and direct management of a centralized control plane is avoided, so that the centralized control plane is unaware of intra-domain deployment of a user plane network element, an application, and the like, thereby reducing management complexity of the centralized control plane.

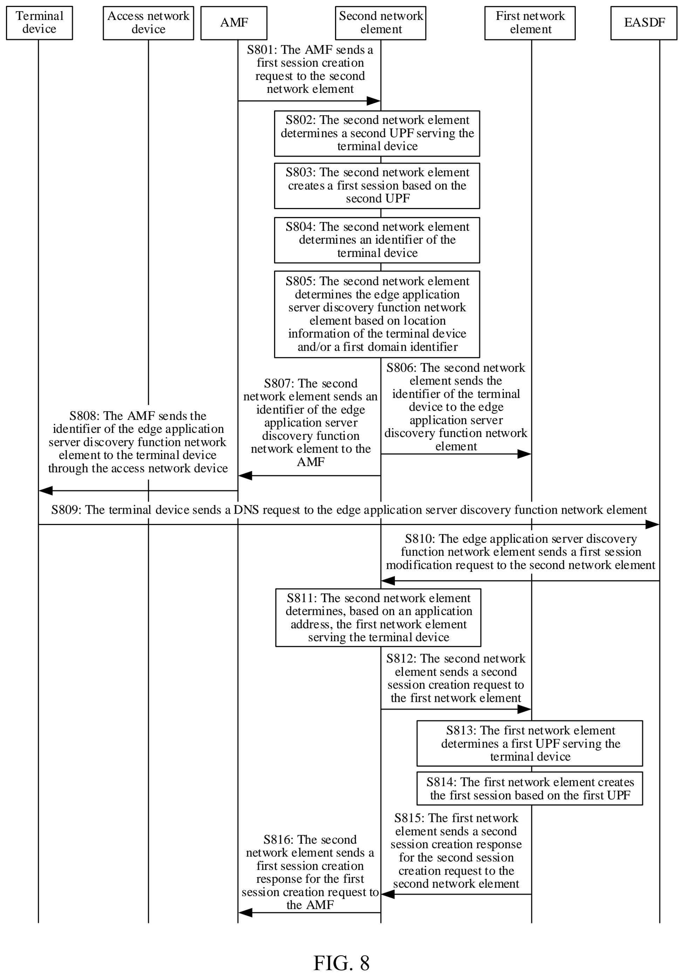

FIG. 8 is a schematic flowchart of another information processing method according to an embodiment of this application. As shown in FIG. 8, the information processing method includes the following steps S801 to S816. Step S801 is a specific implementation of step S401. The method shown in FIG. 8 may be performed by a terminal device, an access network device, an AMF, a first network element, a second network element, and an edge application server discovery function network element. Alternatively, the method shown in FIG. 8 may be performed by a device or a chip having a terminal device, an access network device, an AMF, a first network element, a second network element, and an edge application server discovery function network element. This is not limited in this embodiment of this application. FIG. 8 is described by using an example in which the method is performed by the terminal device, the access network device, the AMF, the first network element, the second network element, and the edge application server discovery function network element. For example, the first network element is a first SMF, and the second network element is a second SMF.

S801: The AMF sends a first session creation request to the second network element. Correspondingly, the second network element may receive the first session creation request.

In this embodiment of this application, the second network element receives the first session creation request sent by the AMF.

Optionally, the first session creation request includes a tunnel identifier of the access network device.

S802: The second network element determines a second UPF serving the terminal device.

In this embodiment of this application, the second UPF is used as an anchor (for example, a C-UPF) between a radio access network and a DN.

In a possible implementation, a specific implementation in which the second network element determines the second UPF serving the terminal device may be: determining, based on location information of the terminal device and/or a first domain identifier, the second UPF serving the terminal device.

S803: The second network element creates a first session based on the second UPF.

In a possible implementation, the method further includes: The second network element determines a tunnel identifier of the second UPF. The tunnel identifier of the second UPF may be determined in one of the following two manners.

Manner 1: The second network element allocates the tunnel identifier of the second UPF.

Manner 2: The second network element sends, to the second UPF, information indicating to allocate the tunnel identifier of the second UPF. Correspondingly, the second UPF may receive the information indicating to allocate the tunnel identifier of the second UPF, and allocate the tunnel identifier of the second UPF. The second UPF may send the tunnel identifier of the second UPF to the second network element. Correspondingly, the second network element may receive the tunnel identifier of the second UPF.

Optionally, a specific implementation in which the second network element creates the first session based on the second UPF may include the following steps s51 to s53.

s51: The second network element sends the tunnel identifier of the access network device to the second UPF. Correspondingly, the second UPF may receive the tunnel identifier of the access network device.

s52: The second network element sends the tunnel identifier of the second UPF to the AMF. Correspondingly, the AMF may receive the tunnel identifier of the second UPF.

s53: The AMF sends the tunnel identifier of the second UPF to the access network device. Correspondingly, the access network device may receive the tunnel identifier of the second UPF.

A sequence of performing step s51 and step s52 is not limited, and step s51 and step s52 may alternatively be performed simultaneously.

S804: The second network element determines an identifier of the terminal device.

In a possible implementation, the method further includes: The second network element determines the identifier of the terminal device.

Optionally, the second network element may determine the identifier of the terminal device in one of the following two manners.

Manner 1: The second network element allocates the identifier of the terminal device.

Manner 2: The second network element sends, to the second UPF, information indicating to allocate the identifier of the terminal device. Correspondingly, the second UPF may receive the information indicating to allocate the identifier of the terminal device, and allocate the identifier of the terminal device. The second UPF may send the identifier of the terminal device to the second network element. Correspondingly, the second network element may receive the identifier of the terminal device.

S805: The second network element determines the edge application server discovery function network element based on the location information of the terminal device and/or the first domain identifier.

S806: The second network element sends the identifier of the terminal device to the edge application server discovery function network element.

Based on this manner, the identifier of the terminal device is associated with the second network element on the edge application server discovery function network element, so that the edge application server discovery function network element can send a session request to the second network element.

S807: The second network element sends an identifier of the edge application server discovery function network element to the AMF. Correspondingly, the AMF may receive the identifier of the edge application server discovery function network element.

S808: The AMF sends the identifier of the edge application server discovery function network element to the terminal device through the access network device. Correspondingly, the terminal device may receive the identifier of the edge application server discovery function network element.

S809: The terminal device sends a DNS request to the edge application server discovery function network element. Correspondingly, the edge application server discovery function network element may receive the DNS request.

S810: The edge application server discovery function network element sends a first session modification request to the second network element.

In this embodiment of this application, the edge application server discovery function network element has been associated with the second network element. After receiving a DNS request, the edge application server discovery function network element obtains an application address from a DNS server, and then sends the first session modification request to the second network element. The first session modification request is used to request to modify a UPF serving the terminal device, and the first session modification request includes the application address and the identifier of the terminal device.

S811: The second network element determines, based on the application address, the first network element serving the terminal device.

In this embodiment of this application, the second network element may determine, based on the application address and address information of an area served by all first network elements, the first network element serving the terminal device. For example, when address information of an area served by a network element A includes the application address, the network element A may be determined as the first network element serving the terminal device.

In a possible implementation, the first network element is a network element that provides a session management service and/or a data forwarding service.

S812: The second network element sends a second session creation request to the first network element. Correspondingly, the first network element may receive the second session creation request.

In this embodiment of this application, the second session creation request is used to request to create or modify a UPF serving the terminal device, and create the first session for the terminal device based on a created or modified UPF. The second session creation request includes the location information of the terminal device and/or the first domain identifier, the first domain identifier is an identifier of a domain in which the terminal device is located or an identifier of a domain to be accessed by the terminal device, and the first network element is a network element that is determined by the second network element and that is configured to serve the terminal device.

In other words, after creating the first session based on the second UPF, the second network element needs to modify the first session based on an access requirement of a user, that is, request the first network element to create or modify the UPF serving the terminal device, and create the first session for the terminal device based on the created or modified UPF (namely, the first UPF). Based on this manner, the second network element and the first network element respectively manage some user plane network elements. To be specific, the second network element is responsible for managing the second UPF, and the first network element is responsible for managing the first UPF, so that compatibility with existing deployment can be implemented, and management complexity of a centralized control plane can be reduced to some extent.

The second session creation request further includes the application address, the tunnel identifier of the second UPF, and the tunnel identifier of the access network device.

S813: The first network element determines the first UPF serving the terminal device.

In this embodiment of this application, the first UPF is used as an offloading network element (for example, a D-UPF). A UPF created or modified by the first network element is the first UPF.

In a possible implementation, a specific implementation in which the first network element determines the first UPF serving the terminal device may be: determining, based on the application address, the first UPF serving the terminal device.

Optionally, a specific implementation in which the first network element determines, based on the application address, the first UPF serving the terminal device may be: determining the first UPF based on the application address and information about an address to which a UPF managed by the first network element is allowed to connect. For example, if the information about the address to which the UPF managed by the first network element is allowed to connect includes the application address, the UPF may be determined as the first UPF.

Optionally, that the first network element determines the first UPF based on the application address and the information about the address to which the UPF managed by the first network element is allowed to connect includes: determining the first UPF based on the application address, the information about the address to which the UPF managed by the first network element is allowed to connect, the location information of the terminal device, and/or the identifier of the terminal device. For example, when the information about the address to which the UPF managed by the first network element is allowed to connect includes the application address, and a distance between the UPF and the terminal device and/or a distance between the UPF and an application are/is less than a preset threshold, the UPF may be determined as the first UPF.

In a possible implementation, a specific implementation in which the first network element determines the first UPF serving the terminal device may be: determining, according to an access policy from the second network element or a local policy configured by the first network element, the first UPF serving the terminal device.

In a possible implementation, the method further includes: The first network element sends, to the first UPF or the second UPF, the access policy from the second network element and the local policy configured by the first network element.

S814: The first network element creates the first session based on the first UPF.

In a possible implementation, the method further includes: The first network element determines an uplink tunnel identifier and a downlink tunnel identifier of the first UPF. The uplink tunnel identifier and the downlink tunnel identifier of the first UPF may be determined in one of the following two manners.

Manner 1: The first network element allocates the uplink tunnel identifier and the downlink tunnel identifier of the first UPF.

Manner 2: The first network element sends, to the first UPF, information indicating to allocate the uplink tunnel identifier and the downlink tunnel identifier of the first UPF. Correspondingly, the first UPF may receive the information indicating to allocate the uplink tunnel identifier and the downlink tunnel identifier of the first UPF, and allocate the uplink tunnel identifier and the downlink tunnel identifier of the first UPF. The first UPF may send the uplink tunnel identifier and the downlink tunnel identifier of the first UPF to the first network element. Correspondingly, the first network element may receive the uplink tunnel identifier and the downlink tunnel identifier of the first UPF.

Optionally, a specific implementation in which the first network element creates the first session based on the first UPF may include the following steps s61 to s64.

s61: The first network element sends the uplink tunnel identifier and the downlink tunnel identifier of the first UPF to the second network element.

s62: The second network element sends the uplink tunnel identifier of the first UPF to the AMF. Correspondingly, the AMF may receive the uplink tunnel identifier of the first UPF.

s63: The AMF sends the uplink tunnel identifier of the first UPF to the access network device. Correspondingly, the access network device may receive the uplink tunnel identifier of the first UPF. Subsequently, the access network device sends an uplink packet to the first UPF.

s64: The second network element sends the downlink tunnel identifier of the first UPF to the second UPF. Correspondingly, the second UPF may receive the downlink tunnel identifier of the first UPF. Subsequently, a packet that is sent to the terminal device and that is received by the second UPF is sent to the first UPF through a tunnel.

A sequence of performing step s62 and step s64 is not limited, and step s62 and step s64 may alternatively be performed simultaneously.

S815: The first network element sends a second session creation response for the second session creation request to the second network element. Correspondingly, the second network element may receive the second session creation response.

In a possible implementation, the second session creation response indicates that creation of the first session is completed.

S816: The second network element sends a first session creation response for the first session creation request to the AMF. Correspondingly, the AMF may receive the first session creation response.

In a possible implementation, the first session creation response indicates that creation of the first session is completed.

In the method described in FIG. 8, the second network element and the first network element respectively manage some user plane network elements. To be specific, the second network element is responsible for managing the second UPF, and the first network element is responsible for managing the first UPF. The first network element is a network element selected by the second network element from a plurality of network elements to serve the terminal device. Based on this manner, the compatibility with the existing deployment can be implemented, and the management complexity of the centralized control plane can be reduced to some extent.

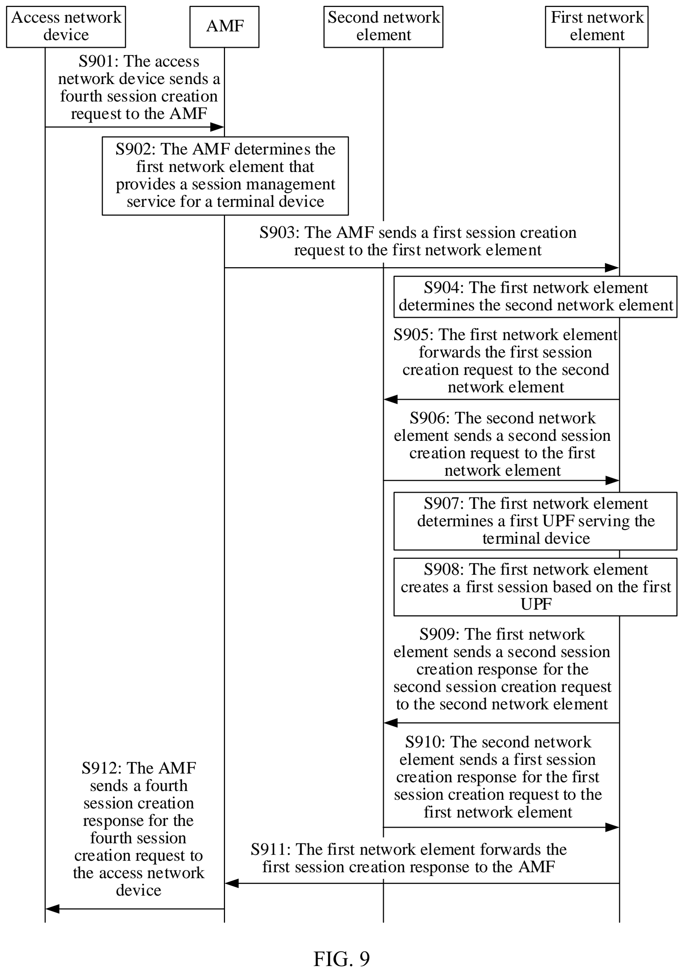

FIG. 9 is a schematic flowchart of another information processing method according to an embodiment of this application. As shown in FIG. 9, the information processing method includes the following steps S901 to S912. Step S901 is a specific implementation of step S401. The method shown in FIG. 9 may be performed by an access network device, an AMF, a first network element, and a second network element. Alternatively, the method shown in FIG. 9 may be performed by a device or a chip having an access network device, an AMF, a first network element, and a second network element. This is not limited in this embodiment of this application. FIG. 9 is described by using an example in which the method is performed by the AMF, the first network element, and the second network element. For example, the first network element is a first SMF, and the second network element is a second SMF.

S901: The access network device sends a fourth session creation request to the AMF. Correspondingly, the AMF may receive the fourth session creation request.

In this embodiment of this application, the fourth session creation request is used to request to create a first session for a terminal device.

Optionally, the fourth session creation request includes a tunnel identifier of the access network device.

S902: The AMF determines the first network element that provides a session management service for the terminal device.

In this embodiment of this application, the AMF may determine, from a plurality of managed network elements, the first network element that provides the session management service for the terminal device, that is, the first network element performs intra-domain user plane management, so that direct management of a centralized control plane is avoided, and the centralized control plane is unaware of intra-domain deployment of a user plane network element, an application, and the like, thereby reducing management complexity of the centralized control plane.

In a possible implementation, a specific implementation in which the AMF determines the first network element that provides the session management service for the terminal device may be: determining, based on location information of the terminal device and/or a first domain identifier, the first network element serving the terminal device.

S903: The AMF sends a first session creation request to the first network element. Correspondingly, the first network element may receive the first session creation request.

In this embodiment of this application, the first session creation request is used to request to create the first session for the terminal device. Optionally, the first session creation request includes the location information of the terminal device and/or the first domain identifier.

In a possible implementation, the method further includes: The AMF determines a second network element based on first information, where the first information includes the location information of the terminal device and information about locations served by all second network elements, or the first information includes the first domain identifier and an identifier of a domain served by all second network elements, and the first session creation request further includes an identifier of the second network element.

S904: The first network element determines the second network element.

In a possible implementation, the first network element may determine the second network element in one of the following two manners.

Manner 1: The first session creation request further includes the identifier of the second network element, and the first network element can determine the second network element based on the identifier of the second network element. Based on this manner, computing resources used by the first network element to determine the second network element are saved.

Manner 2: The first network element determines the second network element based on the first information, where the first information includes the location information of the terminal device and information about locations served by all second network elements, or the first information includes the first domain identifier and an identifier of a domain served by all second network elements. This manner helps improve flexibility and accuracy of selecting the second network element.

S905: The first network element forwards the first session creation request to the second network element. Correspondingly, the second network element may receive the first session creation request.

In this embodiment of this application, the first network element may be used as an intermediate network element, and directly forwards, to the second network element, the first session creation request sent by the AMF. The second network element receives the first session creation request sent by the first network element.

S906: The second network element sends a second session creation request to the first network element. Correspondingly, the first network element may receive the second session creation request.

S907: The first network element determines a first UPF serving the terminal device.

S908: The first network element creates the first session based on the first UPF.

S909: The first network element sends a second session creation response for the second session creation request to the second network element. Correspondingly, the second network element may receive the second session creation response.

For specific implementations of steps S906 to S909, refer to the specific implementations of steps S402 to S405. Details are not described herein again. For specific implementations of steps S906 to S909, refer to the specific implementations of steps S503 to S506. In addition, steps S507 to S513 may be further performed after step S909. Details are not described herein again. For specific implementations of steps S906 to S909, refer to the specific implementations of steps S703 to S706. Details are not described herein again.

S910: The second network element sends a first session creation response for the first session creation request to the first network element. Correspondingly, the first network element may receive the first session creation response.

In a possible implementation, the second session creation response may indicate that creation of the first session is completed.

S911: The first network element forwards the first session creation response to the AMF. Correspondingly, the AMF may receive the first session creation response.

In this embodiment of this application, the first network element may be used as an intermediate network element, and directly forwards, to the AMF, the first session creation response sent by the first network element.

S912: The AMF sends a fourth session creation response for the fourth session creation request to the access network device. Correspondingly, the access network device may receive the fourth session creation response.

In a possible implementation, the fourth session creation response may indicate that creation of the first session is completed.

In the method described in FIG. 9, the AMF selects, from a plurality of network elements, the first network element serving the terminal device, that is, the first network element performs intra-domain user plane management. The first network element selects, for the terminal device based on an application address accessed by a user or an access policy, a managed user plane network element as an anchor UPF and as an offloading UPF, to insert an offloading network element based on a user application access requirement or insert an offloading network element in a session creation process. Based on this manner, the direct management of the centralized control plane is avoided, so that the centralized control plane is unaware of the intra-domain deployment of the user plane network element, the application, and the like, thereby reducing the management complexity of the centralized control plane.

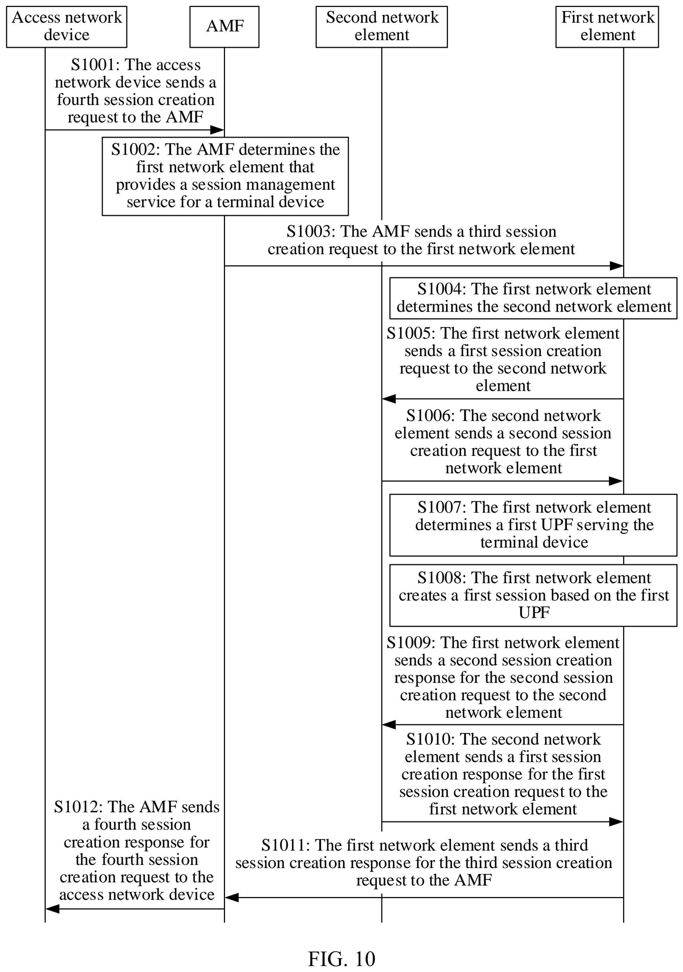

FIG. 10 is a schematic flowchart of another information processing method according to an embodiment of this application. As shown in FIG. 10, the information processing method includes the following steps S1001 to S1012. The method shown in FIG. 10 may be performed by an access network device, an AMF, a first network element, and a second network element. Alternatively, the method shown in FIG. 10 may be performed by a device or a chip having an access network device, an AMF, a first network element, and a second network element. This is not limited in this embodiment of this application. FIG. 10 is described by using an example in which the method is performed by the access network device, the AMF, the first network element, and the second network element. For example, the first network element is a first SMF, and the second network element is a second SMF.

S1001: The access network device sends a fourth session creation request to the AMF. Correspondingly, the AMF may receive the fourth session creation request.

S1002: The AMF determines the first network element that provides a session management service for a terminal device.

For specific implementations of steps S1001 and S1002, refer to the specific implementations of steps S901 and S902. Details are not described herein again.

S1003: The AMF sends a third session creation request to the first network element. Correspondingly, the first network element may receive the third session creation request.

In this embodiment of this application, the third session creation request is used to request to create a first session for the terminal device. Optionally, the third session creation request includes location information of the terminal device and/or a first domain identifier.

In a possible implementation, the third session creation request includes a tunnel identifier of the access network device.

In a possible implementation, the method further includes: The AMF determines a second network element based on first information, where the first information includes the location information of the terminal device and information about locations served by all second network elements, or the first information includes the first domain identifier and an identifier of a domain served by all second network elements, and the third session creation request further includes an identifier of the second network element.

S1004: The first network element determines the second network element.

In a possible implementation, the first network element may determine the second network element in one of the following two manners.

Manner 1: The third session creation request further includes the identifier of the second network element, and the first network element can determine the second network element based on the identifier of the second network element.

Manner 2: The first network element determines the second network element based on the first information, where the first information includes the location information of the terminal device and information about locations served by all second network elements, or the first information includes the first domain identifier and an identifier of a domain served by all second network elements.

S1005: The first network element sends a first session creation request to the second network element. Correspondingly, the second network element may receive the first session creation request.

In this embodiment of this application, after receiving the third session creation request sent by the AMF, the first network element processes the third session creation request, and then sends the first session creation request to the second network element. The first session creation request includes a NAS message and the tunnel identifier of the access network device. The second network element receives the first session creation request sent by the first network element.

S1006: The second network element sends a second session creation request to the first network element. Correspondingly, the first network element may receive the second session creation request.

S1007: The first network element determines a first UPF serving the terminal device.

S1008: The first network element creates the first session based on the first UPF.

S1009: The first network element sends a second session creation response for the second session creation request to the second network element. Correspondingly, the second network element may receive the second session creation response.

For specific implementations of steps S1006 to S1009, refer to the specific implementations of steps S402 to S405. Details are not described herein again. For specific implementations of steps S1006 to S1009, refer to the specific implementations of steps S503 to S506. In addition, steps S507 to S513 may be further performed after step S1009. Details are not described herein again. For specific implementations of steps S1006 to S1009, refer to the specific implementations of steps S703 to S706. Details are not described herein again.

S1010: The second network element sends a first session creation response for the first session creation request to the first network element. Correspondingly, the first network element may receive the first session creation response.

In a possible implementation, the second session creation response is a NAS message.

In a possible implementation, the second session creation response indicates that creation of the first session is completed.

S1011: The first network element sends a third session creation response for the third session creation request to the AMF. Correspondingly, the AMF may receive the third session creation response.

In this embodiment of this application, after the first network element receives the first session creation response sent by the second network element, in this case, the first session creation response is a NAS message, the first network element needs to create a third session creation response and send the third session creation response to the AMF.

In a possible implementation, the third session creation response indicates that creation of the first session is completed.

S1012: The AMF sends a fourth session creation response for the fourth session creation request to the access network device. Correspondingly, the access network device may receive the fourth session creation response.

In a possible implementation, the fourth session creation response indicates that creation of the first session is completed.

In the method described in FIG. 10, the AMF selects, from a plurality of network elements, the first network element serving the terminal device, that is, the first network element performs intra-domain user plane management. The first network element selects, for the terminal device based on an application address accessed by a user or an access policy, a managed user plane network element as an anchor UPF and as an offloading UPF, to insert an offloading network element based on a user application access requirement or insert an offloading network element in a session creation process. Based on this manner, direct management of a centralized control plane is avoided, so that the centralized control plane is unaware of intra-domain deployment of a user plane network element, an application, and the like, thereby reducing management complexity of the centralized control plane.

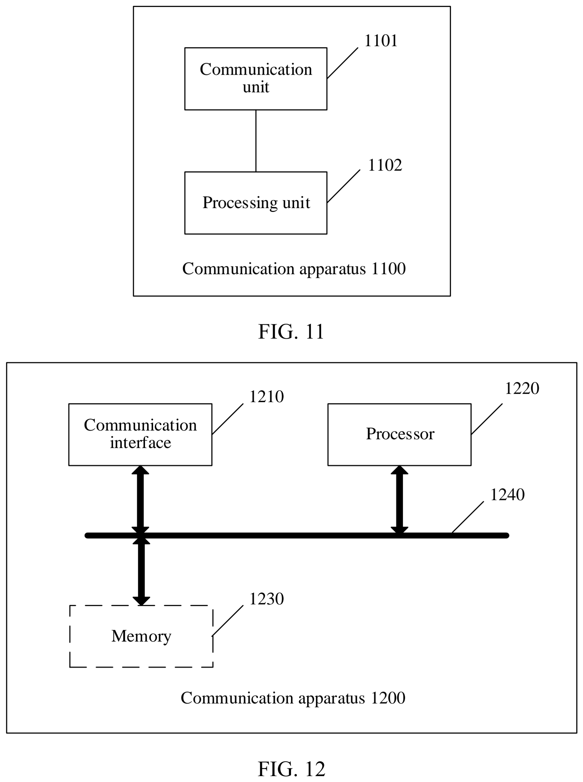

FIG. 11 is a diagram of a structure of a communication apparatus 1100 according to an embodiment of this application. The communication apparatus shown in FIG. 11 may be a second network element, an apparatus in the second network element, or an apparatus that can be used together with the second network element. Alternatively, the communication apparatus shown in FIG. 11 may be a first network element, an apparatus in the first network element, or an apparatus that can be used together with the first network element. Alternatively, the communication apparatus shown in FIG. 11 may be an AMF, an apparatus in the AMF, or an apparatus that can be used together with the AMF. The communication apparatus shown in FIG. 11 may include a communication unit 1101 and a processing unit 1102. Specifically, the processing unit 1102 is configured to process data. The data may be data received by the communication unit 1101, and the processed data may also be sent by the communication unit 1101.

In an implementation, the communication apparatus 1100 is a second network element, an apparatus in the second network element, or an apparatus that can be used together with the second network element.

The communication unit 1101 is configured to receive a first session creation request, where the first session creation request is used to request to create a first session for a terminal device.

The communication unit 1101 is further configured to send a second session creation request to a first network element, where the second session creation request is used to request to create the first session for the terminal device, the second session creation request includes location information of the terminal device and/or a first domain identifier, the first domain identifier is an identifier of a domain in which the terminal device is located or an identifier of a domain to be accessed by the terminal device, and the first network element is a network element that is determined by the second network element and that is configured to serve the terminal device.

The communication unit 1101 is further configured to receive a second session creation response that is sent by the first network element for the second session creation request.

The communication unit 1101 is further configured to send a first session creation response for the first session creation request.

In a possible implementation, the communication unit 1101 is further configured to send, to a unified data management function network element, an identifier of the first network element serving the terminal device.

In a possible implementation, when receiving the first session creation request, the communication unit 1101 is specifically configured to receive the first session creation request sent by an access and mobility management function AMF. Before the communication unit 1101 sends the second session creation request to the first network element, the processing unit 1102 is further configured to determine the first network element serving the terminal device. When sending the first session creation response for the first session creation request, the communication unit 1101 is specifically configured to send the first session creation response for the first session creation request to the AMF.

In a possible implementation, when determining the first network element serving the terminal device, the processing unit 1102 is specifically configured to determine, based on the location information of the terminal device and/or the first domain identifier, the first network element serving the terminal device.

In a possible implementation, when determining, based on the location information of the terminal device and/or the first domain identifier, the first network element serving the terminal device, the processing unit 1102 is specifically configured to: send the location information of the terminal device and/or the first domain identifier to a network repository function network element; and receive the identifier that is of the first network element serving the terminal device and that is sent by the network repository function network element.

In a possible implementation, the second session creation request further includes information indicating to allocate an identifier of the terminal device, the second session creation response includes the identifier of the terminal device and an identifier of an edge application server discovery function network element, and the first session creation response includes the identifier of the edge application server discovery function network element.

In a possible implementation, before the communication unit 1101 sends the second session creation request to the first network element, the processing unit 1102 is further configured to: determine a second user plane function UPF serving the terminal device; create the first session based on the second UPF; determine an identifier of the terminal device; and determine an edge application server discovery function network element based on the location information of the terminal device and/or the first domain identifier. The communication unit 1101 is further configured to receive a first session modification request sent by the edge application server discovery function network element, where the first session modification request is used to request to modify a UPF serving the terminal device, and the first session modification request includes an application address and the identifier of the terminal device. The processing unit 1102 is further configured to determine, based on the application address, the first network element serving the terminal device. That the second session creation request is used to request to create the first session for the terminal device includes: The second session creation request is used to request to create or modify the UPF serving the terminal device, and create the first session for the terminal device based on a created or modified UPF, where the second session creation request further includes the application address.

In a possible implementation, when receiving the first session creation request, the communication unit 1101 is specifically configured to receive the first session creation request that is from an access and mobility management function AMF and that is forwarded by the first network element. When sending the first session creation response for the first session creation request, the communication unit 1101 is specifically configured to send the first session creation response for the first session creation request to the first network element.

In a possible implementation, when receiving the first session creation request, the communication unit 1101 is specifically configured to receive the first session creation request sent by the first network element. When sending the first session creation response for the first session creation request, the communication unit 1101 is specifically configured to send the first session creation response for the first session creation request to the first network element.

In an implementation, the communication apparatus shown in FIG. 11 may be a first network element, an apparatus in the first network element, or an apparatus that can be used together with the first network element.

The communication unit 1101 is configured to receive a second session creation request, where the second session creation request is used to request to create a first session for a terminal device, the second session creation request includes location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device.

The processing unit 1102 is configured to determine a first user plane function UPF serving the terminal device.

The processing unit 1102 is further configured to create the first session based on the first UPF.

The communication unit 1101 is further configured to send a second session creation response for the second session creation request to the second network element.

In a possible implementation, when receiving the second session creation request, the communication unit 1101 is specifically configured to receive the second session creation request sent by the second network element.

In a possible implementation, when determining the first UPF serving the terminal device, the processing unit 1102 is specifically configured to determine, based on the location information of the terminal device and/or the first domain identifier, the first UPF serving the terminal device.

In a possible implementation, the second session creation request further includes information indicating to allocate an identifier of the terminal device, and the processing unit 1102 is further configured to: determine the identifier of the terminal device; and determine an edge application server discovery function network element based on the location information of the terminal device and/or the first domain identifier, where the second session creation response includes the identifier of the terminal device and an identifier of the edge application server discovery function network element.

In a possible implementation, the communication unit 1101 is further configured to: receive a first session modification request sent by the edge application server discovery function network element, where the first session modification request is used to request to modify a UPF serving the terminal device, and the first session modification request includes an application address and the identifier of the terminal device. The processing unit 1102 is further configured to: determine, based on the application address, a second UPF serving the terminal device; and modify the first session based on the second UPF.

In a possible implementation, when determining, based on the application address, the second UPF serving the terminal device, the processing unit 1102 is specifically configured to determine the second UPF based on the application address and information about an address to which a UPF managed by the first network element is allowed to connect.

In a possible implementation, that the first network element determines the second UPF based on the application address and the information about the address to which the UPF managed by the first network element is allowed to connect includes: determining the second UPF based on the application address, the information about the address to which the UPF managed by the first network element is allowed to connect, the location information of the terminal device, and/or the identifier of the terminal device.

In a possible implementation, when determining the first UPF serving the terminal device, the processing unit 1102 is specifically configured to determine, according to an access policy from the second network element or a local policy configured by the first network element, the first UPF serving the terminal device.

In a possible implementation, the communication unit 1101 is further configured to send, to the first UPF or the second UPF, the access policy from the second network element and the local policy configured by the first network element.

In a possible implementation, that the second session creation request is used to request to create the first session for the terminal device includes: The second session creation request is used to request to create or modify a UPF serving the terminal device, and create the first session for the terminal device based on a created or modified UPF, where the modified UPF is the first UPF, where the second session creation request further includes an application address.

In a possible implementation, when determining the first UPF serving the terminal device, the processing unit 1102 is specifically configured to determine, based on the application address, the first UPF serving the terminal device.

In a possible implementation, before receiving the second session creation request, the communication unit 1101 is further configured to receive a first session creation request sent by an access and mobility management function AMF, where the first session creation request is used to request to create the first session for the terminal device. The processing unit 1102 is further configured to determine the second network element. The communication unit 1101 is further configured to forward the first session creation request to the second network element. After sending the second session creation response for the second session creation request to the second network element, the communication unit 1101 is further configured to: receive a first session creation response that is sent by the second network element for the first session creation request; and forward the first session creation response to the AMF.

In a possible implementation, before receiving the second session creation request, the communication unit 1101 is further configured to receive a third session creation request sent by an access and mobility management function AMF, where the third session creation request is used to request to create the first session for the terminal device. The processing unit 1102 is further configured to determine the second network element. The communication unit 1101 is further configured to send a first session creation request to the second network element, where the first session creation request is used to request to create the first session for the terminal device. After sending the second session creation response for the second session creation request to the second network element, the communication unit 1101 is further configured to: receive a first session creation response that is sent by the second network element for the first session creation request; and send a third session creation response for the third session creation request to the AMF.

In a possible implementation, when determining the second network element, the processing unit 1102 is specifically configured to determine the second network element based on first information, where the first information includes the location information of the terminal device and information about locations served by all second network elements, or the first information includes the first domain identifier and an identifier of a domain served by all second network elements.

In an implementation, the communication apparatus 1100 is an AMF, an apparatus in the AMF, or an apparatus that can be used together with the AMF.

The communication unit 1101 is configured to receive a fourth session creation request sent by an access network device, where the fourth session creation request is used to request to create a first session for a terminal device.

The processing unit 1102 is configured to determine a first network element that provides a session management service for the terminal device.

The communication unit 1101 is further configured to send a first session creation request or a third session creation request to the first network element, where the first session creation request or the third session creation request is used to request to create the first session for the terminal device.

The communication unit 1101 is further configured to receive a first session creation response that is forwarded by the first network element for the first session creation request, or receive a third session creation response that is sent by the first network element for the third session creation request.

The communication unit 1101 is further configured to send a fourth session creation response for the fourth session creation request to the access network device.

In a possible implementation, the processing unit 1102 is further configured to determine a second network element based on first information, where the first information includes location information of the terminal device and information about locations served by all second network elements, or the first information includes a first domain identifier and an identifier of a domain served by all second network elements, and the first session creation request or the third session creation request further includes an identifier of the second network element.

In a possible implementation, when determining the first network element that provides the session management service for the terminal device, the processing unit 1102 is specifically configured to determine, based on the location information of the terminal device and/or the first domain identifier, the first network element that provides the session management service for the terminal device.

FIG. 12 shows another communication apparatus 1200 according to an embodiment of this application. The communication apparatus 1200 is configured to implement a function of the second network element, the first network element, or the AMF. The apparatus may be a second network element or an apparatus used in a second network element; or the apparatus may be a first network element or an apparatus used in a first network element; or the apparatus may be an AMF or an apparatus used in an AMF. An apparatus used in a device (for example, the second network element, the first network element, or the AMF) may be a chip system or a chip in the device. The chip system may include a chip, or may include a chip and another discrete device.

The communication apparatus 1200 includes at least one processor 1220, configured to implement a data transmission function of a device (for example, the second network element, the first network element, or the AMF) in the method provided in embodiments of this application. The communication apparatus 1200 may further include a communication interface 1210, configured to implement receiving and sending operations of a device (for example, the second network element, the first network element, or the AMF) in the method provided in embodiments of this application. In this embodiment of this application, the communication interface may be a transceiver, a circuit, a bus, a module, or another type of communication interface, and is configured to communicate with another device through a transmission medium. For example, the communication interface 1210 is used by an apparatus in the communication apparatus 1200 to communicate with another device. The processor 1220 receives and sends data through the communication interface 1210, and is configured to implement the methods in the foregoing method embodiments.

The communication apparatus 1200 may further include at least one memory 1230, configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions stored in the memory 1230. At least one of the at least one memory may be included in the processor.

A specific connection medium between the communication interface 1210, the processor 1220, and the memory 1230 is not limited in this embodiment of this application. In this embodiment of this application, the memory 1230, the processor 1220, and the communication interface 1210 are connected through a bus 1240 in FIG. 12. The bus is represented by a bold line in FIG. 12. A manner of a connection between other components is merely an example for description, and is not limited. The bus may be classified into an address bus, a data bus, a control bus, and the like. For ease of representation, only one bold line is used to represent the bus in FIG. 12, but this does not indicate that there is only one bus or only one type of bus.

When the communication apparatus 1200 is specifically an apparatus used in a device (for example, the second network element, the first network element, or the AMF), for example, when the communication apparatus 1200 is specifically a chip or a chip system, the communication interface 1210 may output or receive a baseband signal. When the communication apparatus 1200 is specifically a device (for example, the second network element, the first network element, or the AMF), the communication interface 1210 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

An embodiment of this application further provides a computer-readable storage medium. The computer-readable storage medium stores computer-executable instructions. When the computer-executable instructions are executed, the method performed by the second network element, the first network element, or the AMF in the foregoing method embodiments is implemented.

An embodiment of this application further provides a computer program product. The computer program product includes a computer program. When the computer program is executed, the method performed by the second network element, the first network element, or the AMF in the foregoing method embodiments is implemented.

An embodiment of this application further provides a communication system. The communication system includes a second network element and a first network element. The second network element is configured to perform the method performed by the second network element in the foregoing method embodiments, and the first network element is configured to perform the method performed by the first network element in the foregoing method embodiments.

An embodiment of this application further provides a communication system. The communication system includes a second network element, a first network element, and an AMF. The second network element is configured to perform the method performed by the second network element in the foregoing method embodiments. The first network element is configured to perform the method performed by the first network element in the foregoing method embodiments. The AMF is configured to perform the method performed by the AMF in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. In addition, it should be further appreciated by a person skilled in the art that embodiments described in this specification are all preferred embodiments, and the involved actions and modules are not necessarily required by this application.

The descriptions of embodiments provided in this application may refer to each other, and the descriptions of embodiments have different focuses. For a part not described in detail in an embodiment, refer to related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof, without departing from the scope of the technical solutions of embodiments of this application.

## Claims

1. An information processing method, wherein the method comprises:
receiving a first session creation request, wherein the first session creation request is used to request to create a first session for a terminal device;
sending a second session creation request to a first network element, wherein the second session creation request is used to request to create the first session for the terminal device, the second session creation request comprises location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device;
receiving a second session creation response that is sent by the first network element for the second session creation request; and
sending a first session creation response for the first session creation request.

2. The method according to claim 1, wherein the method further comprises:
sending, to a unified data management function network element, an identifier of the first network element serving the terminal device.

3. The method according to claim 1 or 2, wherein receiving the first session creation request comprises:
receiving the first session creation request sent by an access and mobility management function network element;
before sending the second session creation request to the first network element, the method further comprises:
determining the first network element serving the terminal device; and
sending the first session creation response for the first session creation request comprises:
sending the first session creation response for the first session creation request to the access and mobility management function network element.

4. The method according to claim 3, wherein determining the first network element serving the terminal device comprises:
determining, based on the location information of the terminal device and/or the first domain identifier, the first network element serving the terminal device.

5. The method according to claim 4, wherein determining, based on the location information of the terminal device and/or the first domain identifier, the first network element serving the terminal device comprises:
sending the location information of the terminal device and/or the first domain identifier to a network repository function network element; and
receiving the identifier that is of the first network element serving the terminal device and that is sent by the network repository function network element.

6. The method according to any one of claims 3 to 5, wherein the second session creation request further comprises information indicating to allocate an identifier of the terminal device, the second session creation response comprises the identifier of the terminal device and an identifier of an edge application server discovery function network element, and the first session creation response comprises the identifier of the edge application server discovery function network element.

7. The method according to claim 1 or 2, wherein before sending the second session creation request to the first network element, the method further comprises:
determining a second user plane function network element serving the terminal device;
creating the first session based on the second user plane function network element;
determining an identifier of the terminal device;
determining an edge application server discovery function network element based on the location information of the terminal device and/or the first domain identifier;
receiving a first session modification request sent by the edge application server discovery function network element, wherein the first session modification request is used to request to modify a user plane function network element serving the terminal device, and the first session modification request comprises an application address and the identifier of the terminal device; and
determining, based on the application address, the first network element serving the terminal device; and
that the second session creation request is used to request to create the first session for the terminal device comprises: the second session creation request is used to request to create or modify the user plane function network element serving the terminal device, and create the first session for the terminal device based on a created or modified user plane function network element, wherein
the second session creation request further comprises the application address.

8. The method according to claim 1 or 2, wherein receiving the first session creation request comprises:
receiving the first session creation request that is from an access and mobility management function network element and that is forwarded by the first network element; and
sending the first session creation response for the first session creation request comprises:
sending the first session creation response for the first session creation request to the first network element.

9. The method according to claim 1 or 2, wherein receiving the first session creation request comprises:
receiving the first session creation request sent by the first network element; and
sending the first session creation response for the first session creation request comprises:
sending the first session creation response for the first session creation request to the first network element.

10. An information processing method, wherein the method comprises:
receiving a second session creation request, wherein the second session creation request is used to request to create a first session for a terminal device, the second session creation request comprises location information of the terminal device and/or a first domain identifier, the first domain identifier is an identifier of a domain in which the terminal device is located or an identifier of a domain to be accessed by the terminal device, and the first network element is a network element that is determined by a second network element and that is configured to serve the terminal device;
determining a first user plane function network element serving the terminal device;
creating the first session based on the first user plane function network element; and
sending a second session creation response for the second session creation request to the second network element.

11. The method according to claim 10, wherein receiving the second session creation request comprises:
receiving the second session creation request sent by the second network element.

12. The method according to claim 11, wherein determining the first user plane function network element serving the terminal device comprises:
determining, based on the location information of the terminal device and/or the first domain identifier, the first user plane function network element serving the terminal device.

13. The method according to claim 11 or 12, wherein the second session creation request further comprises information indicating to allocate an identifier of the terminal device, and the method further comprises:
determining the identifier of the terminal device; and
determining an edge application server discovery function network element based on the location information of the terminal device and/or the first domain identifier, wherein
the second session creation response comprises the identifier of the terminal device and an identifier of the edge application server discovery function network element.

14. The method according to claim 13, wherein the method further comprises:
Receiving a first session modification request sent by the edge application server discovery function network element, wherein the first session modification request is used to request to modify a user plane function network element serving the terminal device, and the first session modification request comprises an application address and the identifier of the terminal device;
determining, based on the application address, a second user plane function network element serving the terminal device; and
modifying the first session based on the second user plane function network element.

15. The method according to claim 14, wherein determining, based on the application address, the second UPF serving the terminal device comprises:
determining the second user plane function network element based on the application address and information about an address to which a user plane function network element managed by the first network element is allowed to connect.

16. The method according to claim 11, wherein determining the first user plane function network element serving the terminal device comprises:
determining, according to an access policy from the second network element or a local policy configured by the first network element, the first user plane function network element serving the terminal device.

17. The method according to any one of claims 10 to 16, wherein the method further comprises:
sending, to the first user plane function network element or the second user plane function network element, the access policy from the second network element and the local policy configured by the first network element.

18. The method according to claim 11, wherein that the second session creation request is used to request to create the first session for the terminal device comprises:
the second session creation request is used to request to create or modify a user plane function network element serving the terminal device, and create the first session for the terminal device based on a created or modified user plane function network element, wherein the modified user plane function network element is the first user plane function network element, wherein
the second session creation request further comprises an application address.

19. The method according to claim 18, wherein determining the first user plane function network element serving the terminal device comprises:
determining, based on the application address, the first user plane function network element serving the terminal device.

20. The method according to claim 10, wherein before receiving the second session creation request, the method further comprises:
receiving a first session creation request sent by an access and mobility management function network element, wherein the first session creation request is used to request to create the first session for the terminal device;
determining the second network element; and
forwarding the first session creation request to the second network element; and
after sending the second session creation response for the second session creation request to the second network element, the method further comprises:
receiving a first session creation response that is sent by the second network element for the first session creation request; and
forwarding the first session creation response to the access and mobility management function network element.

21. The method according to claim 10, wherein before receiving the second session creation request, the method further comprises:
receiving a third session creation request sent by an access and mobility management function network element, wherein the third session creation request is used to request to create the first session for the terminal device;
determining the second network element; and
sending a first session creation request to the second network element, wherein the first session creation request is used to request to create the first session for the terminal device; and
after sending the second session creation response for the second session creation request to the second network element, the method further comprises:
receiving a first session creation response that is sent by the second network element for the first session creation request; and
sending a third session creation response for the third session creation request to the access and mobility management function network element.

22. The method according to claim 20 or 21, wherein determining the second network element comprises:
determining the second network element based on first information, wherein the first information comprises the location information of the terminal device and information about a location served by at least one second network element, or the first information comprises the first domain identifier and an identifier of a domain served by at least one second network element.

23. An information processing method, wherein the method comprises:
receiving a fourth session creation request sent by an access network device, wherein the fourth session creation request is used to request to create a first session for a terminal device;
determining a first network element that provides a session management service for the terminal device;
sending a first session creation request or a third session creation request to the first network element, wherein the first session creation request or the third session creation request is used to request to create the first session for the terminal device;
receiving a first session creation response that is forwarded by the first network element for the first session creation request, or receiving a third session creation response that is sent by the first network element for the third session creation request; and
sending a fourth session creation response for the fourth session creation request to the access network device.

24. The method according to claim 23, wherein the method further comprises:
determining a second network element based on first information, wherein the first information comprises location information of the terminal device and information about a location served by at least one second network element, or the first information comprises a first domain identifier and an identifier of a domain served by at least one second network element, the first domain identifier is an identifier of a domain in which the terminal device is located or an identifier of a domain to be accessed by the terminal device, and the first session creation request or the third session creation request further comprises an identifier of the second network element.

25. The method according to claim 23 or 24, wherein determining the first network element that provides the session management service for the terminal device comprises:
determining, based on the location information of the terminal device and/or the first domain identifier, the first network element that provides the session management service for the terminal device.

26. A communication system, comprising a first network element and a second network element, wherein the second network element is configured to perform the method according to any one of claims 1 to 9, and the first network element is configured to perform the method according to any one of claims 10 to 22.

27. The method according to claim 26, wherein the communication system further comprises an access and mobility management function network element, and the access and mobility management function network element is configured to perform the method according to any one of claims 23 to 25.

28. A communication apparatus, comprising a function or a unit configured to perform the method according to any one of claims 1 to 9, a function or a unit configured to perform the method according to any one of claims 10 to 22, or a function or a unit configured to perform the method according to any one of claims 23 to 25.

29. A communication apparatus, comprising a processor and a memory, wherein the processor is coupled to the memory, and the processor is configured to implement the method according to any one of claims 1 to 9, or the processor is configured to implement the method according to any one of claims 10 to 22, or the processor is configured to implement the method according to any one of claims 23 to 25.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 9 by using a logic circuit or by executing code instructions, or the processor is configured to implement the method according to any one of claims 10 to 22 by using a logic circuit or by executing code instructions, or the processor is configured to implement the method according to any one of claims 23 to 25 by using a logic circuit or by executing code instructions.

31. A computer-readable storage medium, wherein the storage medium stores a computer program or instructions; and when the computer program or the instructions are executed by a communication apparatus, the method according to any one of claims 1 to 9 is implemented, or the method according to any one of claims 10 to 22 is implemented, or the method according to any one of claims 23 to 25 is implemented.

32. A computer program product, wherein when a computer reads and executes the computer program product, the computer is enabled to perform the method according to any one of claims 1 to 9, or the computer is enabled to perform the method according to any one of claims 10 to 22, or the computer is enabled to perform the method according to any one of claims 23 to 25.
